# EUROPÄISCHE PATENTSCHRIFT

(11) **EP 2 724 036 B1**
(45) Veröffentlichungstag und Bekanntmachung des Hinweises auf die Patenterteilung: **10.08.2016**
(21) Anmeldenummer: 12745411.4
(22) Anmeldetag: 19.06.2012
(51) Int. Cl.: F16C 7/02

(54) **BAUTEIL ZUR AUFNAHME UND/ODER ÜBERTRAGUNG VON MECHANISCHEN KRÄFTEN UND/ODER MOMENTEN, EIN VERFAHREN ZU DESSEN HERSTELLUNG UND DESSEN VERWENDUNG**
COMPONENT FOR ABSORBING AND/OR TRANSMITTING MECHANICAL FORCES AND/OR MOMENTS, METHOD FOR PRODUCING SAME AND USE THEREOF
PIÈCE POUR ABSORBER ET/OU TRANSMETTRE DES FORCES ET/OU COUPLES MÉCANIQUES, SON PROCÉDÉ DE FABRICATION ET SON UTILISATION

(30) Priorität: 22.06.2011 DE 102011110288; 09.09.2011 DE 102011053480
(43) Veröffentlichungstag der Anmeldung: 30.04.2014
(73) Patentinhaber: MT Aerospace AG, 86153 Augsburg (DE)
(72) Erfinder: FIEDLER, Wolfgang, 83646 Bad Tölz (DE); LIPPERT, Thomas, 86179 Augsburg (DE); TOPRAK, Taylan, 86438 Kissing (DE)
(74) Vertreter: Grape, Knut
(86) Internationale Anmeldenummer: PCT/EP2012/061715
(87) Internationale Veröffentlichungsnummer: WO 2012/175500

(56) Entgegenhaltungen:
- DE-A1- 3 331 021
- DE-B4-102006 058 377
- DE-U1-202005 010 293

## Beschreibung

Die vorliegende Erfindung betrifft ein Bauteil zur Aufnahme und/oder Übertragung von mechanischen Kräften und/oder Momenten, ein Verfahren zu dessen Herstellung und dessen Verwendung.

Derartige Bauteile sind allgemein bekannt. Nur beispielhaft ist die DE 10 2006 058 377 B4 genannt, die auf eine Stange zur strukturellen Verstärkung einer Rumpfstruktur eines Flugzeuges gerichtet ist, welche aus zwei endseitig angeordneten, formstabilen Bauteilelementen und einem hohlprofilierten Bauteilelement aus faserverstärktem Kunststoff, das von den zwei formstabilen Bauteilelementen eingefasst ist, gebildet ist. In der Praxis haben sich jedoch derartige Bauteile allesamt als durchweg nachteilig erwiesen, da deren Bauweise oftmals aufwendig, nicht ausreichend formstabil und von verhältnismäßig hohem Gewicht sind, zugleich keine hohen Kräfte und/oder Momente aufnehmen und übertragen können, damit einhergehend keine befriedigende Festigkeits- und Steifigkeitswerte aufweisen. Hinzu kommt, dass deren Lebensdauer in aller Regel nicht besonders hoch und deren Herstellung ausgesprochen kostenintensiv sind.

Das Dokument DE 20 2005 010 293 V1 offenbart ein Krafteinleitungselement an Streben aus Faserverbundwerkstoff.

Der vorliegenden Erfindung liegt daher die Aufgabe zugrunde, ein Bauteil zur Aufnahme und/oder Übertragung von mechanischen Kräften und/oder Momenten zur Verfügung zu stellen, mit welchem sich die obigen Nachteile verhindern lassen, welches mithin konstruktiv besonders einfach, zugleich kompakt und formstabil sowie sehr leichtbauend ist, eine Übertragung hoher Kräfte und Momente ermöglicht, damit einhergehend eine ausgesprochen hohe Festigkeit und Steifigkeit aufweist, sowie eine hohe Lebensdauer besitzt und in der Herstellung ausgesprochen kostengünstig ist, und ein Verfahren zu dessen Herstellung sowie eine Verwendung dessen bereitzustellen.

Diese Aufgabe wird auf überraschend einfache Weise durch die Merkmale des Anspruchs 1 gelöst.

Durch die Ausgestaltung des erfindungsgemäßen Bauteiles zur Aufnahme und/oder Übertragung von mechanischen Kräften und/oder Momenten umfassend wenigstens ein formstabiles Bauteilelement mit zumindest einem hohlprofilierten Abschnitt und mindestens ein hohlprofiliertes Bauteilelement aus faserverstärktem Kunststoff, das teilweise von dem hohlprofilierten Abschnitt des formstabilen Bauteilelementes aufnehmbar und in dem hohlprofilierten Abschnitt des formstabilen Bauteilelementes über sich radial nach innen erstreckende Erhebungen und/oder sich radial nach außen erstreckende Vertiefungen, Ausnehmungen oder Durchbrüche formschlüssig anordnenbar ist, wobei der Innenumfang des hohlprofilierten Abschnittes des formstabilen Bauteilelementes und der Außenumfang des hohlprofilierten Bauteilelementes aus faserverstärktem Kunststoff miteinander übereinstimmen oder - infolge von niemals ganz auszuschließenden Toleranzabweichungen bei der Fertigung - zumindest im Wesentlichen übereinstimmen, wird eine besonders einfache, zudem kompakte und formstabile Bauweise des Bauteiles von verhältnismäßig geringem Gewicht erreicht. Darüber hinaus ist eine äußerst zuverlässige Kraft- und/oder Momentenaufnahme bzw. -einleitung und/oder -übertragung ermöglicht. Zugleich weist das erfindungsgemäße Bauteil eine ausgesprochen hohe Festigkeit und Steifigkeit auf. Dadurch, dass der Innenumfang des hohlprofilierten Abschnittes des formstabilen Bauteilelementes und der Außenumfang des hohlprofilierten Bauteilelementes aus faserverstärktem Kunststoff miteinander übereinstimmen oder zumindest im Wesentlichen übereinstimmen, ist eine richtungsorientierte Umformung der Fasern des hohlprofilierten Bauteilelementes aus faserverstärktem Kunststoff sichergestellt. Das Anformen bzw. Anlegen erfolgt ohne jegliche Faltenbildung, da der Innenumfang des hohlprofilierten Abschnittes des formstabilen Bauteilelementes und der Außenumfang des hohlprofilierten Bauteilelementes gleich, jedenfalls im Wesentlichen, d.h. weitgehend bzw. weitestgehend, gleich ist. Die Fasern des hohlprofilierten Bauteilelementes aus faserverstärktem Kunststoff werden somit nicht geknickt, gestaucht, verzogen oder in sonstiger Weise einer ständigen Beaufschlagung unterworfen. Gleichzeitig wird ein Formschluss zwischen dem wenigstens einen formstabilen Bauteilelement und dem mindestens einen hohlprofilierten Bauteilelement aus faserverstärktem Kunststoff infolge der Bauweise des erfindungsgemäßen Bauteiles erhalten. Nicht zuletzt hieraus resultiert eine weitaus erhöhte Lebensdauer des erfindungsgemäßen Bauteiles, da von vornherein jegliche häufig bei Reibschluss auftretende, schädliche Kerbwirkung, sonstige Fehlerquellen in der Struktur und damit einhergehende kritische Schwachstellen, die zu einem frühzeitigen Versagen des Bauteiles insgesamt führen können, einfach und zuverlässig ausgeschlossen sind. Schließlich gestaltet sich die Herstellung des erfindungsgemäßen Bauteiles extrem einfach und wenig arbeitsintensiv und ist somit ausgesprochen kostengünstig.

Vorteilhafte konstruktive Einzelheiten des erfindungsgemäßen Bauteiles sind in den Ansprüchen 2 bis 16 beschrieben.

Entsprechend den Merkmalen nach Anspruch 2 sind die Erhebungen, die sich radial nach innen erstrecken, und/oder die Vertiefungen, Ausnehmungen oder Durchbrüche, die sich radial nach außen erstrecken, in vorteilhafter Weise über den Innenumfang des hohlprofilierten Abschnittes des formstabilen Bauteilelementes zueinander gleichmäßig beabstandet angeordnet.

In ganz bevorzugter Weise sind die sich radial nach innen erstreckenden Erhebungen und/oder die sich radial nach außen erstreckenden Vertiefungen, Ausnehmungen oder Durchbrüche nach Anspruch 3 länglich, langgestreckt, wulstartig, fingerförmig, mäanderförmig, keilförmig, abgewinkelt, kreisförmig, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet, wodurch sich Zug-, Druck- und Torsionskräfte gleichermaßen aufnehmen, einleiten und übertragen lassen.

Erfindungsgemäß ist nach Anspruch 4 vorgesehen, dass die sich radial nach innen erstreckenden Erhebungen und/oder die sich radial nach außen erstreckenden Vertiefungen, Ausnehmungen oder Durchbrüche axial und/oder in einem Winkel zu der Längs achse des formstabilen Bauteilelementes und des hohlprofilierten Bauteilelementes angeordnet sind. Auf diese Weise können von dem erfindungsgemäßen Bauteil Zug-, Druck- und auch Torsionskräfte übertragen werden.

In kumulativer oder alternativer Ausgestaltung können die sich radial nach innen erstreckenden Erhebungen und/oder die sich radial nach außen erstreckenden Vertiefungen, Ausnehmungen oder Durchbrüche nach Anspruch 5 über den Innenumfang des hohlprofilierten Abschnittes des formstabilen Bauteilelementes zueinander axial zur Längsachse des formstabilen Bauteilelementes und des hohlprofilierten Bauteilelementes versetzt angeordnet sein.

Eine weitere konstruktive Ausgestaltung für die sich radial nach innen erstreckenden Erhebungen und/oder die sich radial nach außen erstreckenden Vertiefungen, Ausnehmungen oder Durchbrüche ist in Anspruch 6 vorgeschlagen. Demnach sind die Erhebungen und/oder die Vertiefungen, Ausnehmungen oder Durchbrüche bevorzugt mit stetigen Übergängen zu dem/den/in den/die angrenzenden bzw. dazu benachbarten Bereich/en ausgestattet. Mit anderen Worten gehen die Erhebungen und/oder Vertiefungen, Ausnehmungen oder Durchbrüche stetig, d.h. "sanft" bzw. "geschmeidig", in den/die angrenzenden bzw. dazu benachbarten Bereich/e über bzw. laufen insoweit aus. Kantige, eckige oder scharfe Übergänge, welche schnell zu einer Beschädigung des faserverstärkten Kunststoffes und damit zu einem Versagen des gesamten Bauteilelementes führen können, sind vermieden.

Von ganz besonders großer Bedeutung sind die konstruktiven Maßnahmen des Anspruchs 7, wonach der Innenumfang des hohlprofilierten Abschnittes des formstabilen Bauteilelementes und der Außenumfang des hohlprofilierten Bauteilelementes bei einer Abwicklung eines jeden Querschnittes durch den hohlprofilierten Abschnitt des formstabilen Bauteilelementes und das hohlprofilierte Bauteilelement senkrecht zu deren Längsachse eine gleiche oder im Wesentlichen gleiche Länge aufweisen.

Bevorzugt weisen das formstabile Bauteilelement wenigstens teilweise, insbesondere in einem Bereich von dessen hohlprofilierten Abschnitt, und das hohlprofilierte Bauteilelement nach Anspruch 8 einen Außenumfang von gleicher Form und Abmessung auf.

Darüber hinaus liegt es im Rahmen der Erfindung, dass das formstabile Bauteilelement und/oder das hohlprofilierte Bauteilelement entsprechend Anspruch 9 leichtbauend ausgebildet und/oder korrosionsbeständig ist/sind.

Zweckmäßigerweise ist das formstabile Bauteilelement nach Anspruch 10 aus Metall, insbesondere aus Stahl, Edelstahl, Aluminium, Titan, einer Legierung daraus und/oder aus Kunststoff, insbesondere aus Polyimid (PI), Polyoximethylen (POM) oder Polytetrafluorethylen (PTFE), ohne oder mit Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfaserverstärkung, und/oder einer Kombination daraus gebildet.

Entsprechend den konstruktiven Maßnahmen des Anspruchs 11 kann das formstabile Bauteilelement durch Fräsen, Drehen, Schleifen oder dergleichen Flächenbearbeitung, Gießen oder Feingießen, Ziehen oder Tiefziehen und/oder, insbesondere anschließendes, Verschweißen und/oder einer Kombination daraus herstellbar sein.

Darüber hinaus ist erfindungsgemäß vorgesehen, dass das formstabile Bauteilelement nach Anspruch 12 als Anschluss- oder Verbindungselement, Fitting, Flansch, Einsteckkupplung für die Verbindung von mindestens einem hohlprofilierten Bauteilelement aus faserverstärktem Kunststoff, Knotenelement für ein Fachwerk oder eine Fachwerkstruktur oder dergleichen Anbindungskörper, insbesondere mit einem Gelenkauge, Gelenkkopf oder dergleichen Kraft- und/oder Momenteneinleitungs- bzw. -übertragungselement, ausgebildet ist.

Vorzugsweise ist das hohlprofilierte Bauteilelement aus faserverstärktem Kunststoff nach Anspruch 13 mit Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfasern und/oder einer Kombination daraus verstärkt und/oder aus Faserverbundwerkstoff gebildet.

Weiter liegt es im Rahmen der Erfindung, dass das hohlprofilierte Bauteilelement aus faserverstärktem Kunststoff nach Anspruch 14 durch ein Prepreg-Verfahren, Nassimprägnierungsverfahren oder Resin Transfer Molding (RTM)-Verfahren und/oder einer Kombination daraus oder dergleichen Verfahren zur Fertigung von Faserverbundkörpern herstellbar ist.

Nach Anspruch 15 ist das hohlprofilierte Bauteilelement aus faserverstärktem Kunststoff im Querschnitt bevorzugt rund, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet.

In vorteilhafter Weise ist/sind das formstabile Bauteilelement und/oder das hohlprofilierte Bauteilelement aus faserverstärktem Kunststoff nach Anspruch 16, insbesondere vollständig oder teilweise, länglich, langgestreckt, geschwungen, mäanderförmig, wellenförmig, schlangenförmig, abgewinkelt, (halb-)kreisförmig, (halb-)ellipsenförmig, gebogen, gekrümmt und/oder als Kombination daraus geformt. Demgemäß kann/können sich das formstabile Bauteilelement und/oder das hohlprofilierte Bauteilelement über dessen/deren vollständige Länge oder über einen Teil davon im Wesentlichen axial oder achsparallel erstrecken und/oder in sonstiger, davon abweichender Weise beliebig andere räumliche Formen aufweisen.

Schließlich ist erfindungsgemäß vorgesehen, dass das formstabile Bauteilelement und/oder das hohlprofilierte Bauteilelement aus faserverstärktem Kunststoff entsprechend Anspruch 17, insbesondere vollständig oder teilweise, in wenigstens einer räumlichen Ebene angeordnet ist/sind. Mit anderen Worten kann/können sich das formstabile Bauteilelement und/oder das hohlprofilierte Bauteilelement vollständig oder teilweise in einer einzigen räumlichen Ebene oder in mehreren, insbesondere in zwei oder drei, räumlichen Ebenen erstrecken.

Diese Aufgabe wird weiterhin in verfahrenstechnischer Hinsicht auf überraschend einfache Weise durch die Merkmale des Anspruchs 18 gelöst.

Durch die Ausgestaltung des erfindungsgemäßen Verfahrens zur Herstellung eines Bauteiles zur Aufnahme und/oder Übertragung von mechanischen Kräften und/oder Momenten umfassend wenigstens ein formstabiles Bauteilelement mit einem hohlprofilierten Abschnitt und mindestens ein hohlprofiliertes Bauteilelement aus faserverstärktem Kunststoff, wobei das mindestens eine hohlprofilierte Bauteilelement aus faserverstärktem Kunststoff mit einem Ende teilweise in den hohlprofilierten Abschnitt des formstabilen Bauteilelementes hineingeschoben und von dem hohlprofilierten Abschnitt des formstabilen Bauteilelementes aufgenommen wird und anschließend von einem in das hohlprofilierte Bauteilelement aus faserverstärktem Kunststoff eingebrachten aufblasbaren Element mit seinem Außenumfang formschlüssig an den Innenumfang des formstabilen Bauteilelementes im Bereich von dessen hohlförmigen Abschnitt (an-)gedrückt wird, indem das aufblasbare Element nach Einbringen in das hohlprofilierte Bauteilelement aus faserverstärktem Kunststoff aufgeblasen wird, hat sich in der Praxis neben den bereits im Zusammenhang mit dem Bauteil nach der Erfindung beschrieben Vorteilen, welche das erfindungsgemäße Verfahren allesamt gleichermaßen aufweist und weiterbildet, die extrem einfache, wenig arbeitsintensive und vor allem kostengünstige Handhabung insgesamt als besonders vorteilhaft erwiesen. Dies wiegt um so bedeutsamer, als das erfindungsgemäße Bauteil als ein Massenprodukt anzusehen ist, das in vielseitigster, zugleich auch unterschiedlichster Anwendung zum Einsatz gebracht werden kann.

Weitere vorteilhafte Einzelheiten der erfindungsgemäßen Verfahren sind in den Ansprüchen 19 bis 22 beschrieben.

So ist nach Anspruch 19 erfindungsgemäß vorgesehen, dass das hohlprofilierte Bauteilelement vor dem teilweisen Hineinschieben von dessen Ende in den hohlprofilierten Abschnitt des formstabilen Bauteilelementes radial verformt wird, derart, dass der Außenumfang des hohlprofilierten Bauteilelementes kleiner als der Innenumfang, insbesondere an dem Innenumfang angeordnete, sich radial nach innen erstreckende Erhebungen, des formstabilen Bauteilelementes im Bereich von dessen hohlförmigen Abschnitt ist.

In weitergehender Ausgestaltung des erfindungsgemäßen Verfahrens wird das hohlprofilierte Bauteilelement nach Anspruch 20 mit seinem Außenumfang formschlüssig an den Innenumfang und an dem Innenumfang angeordnete, sich radial nach innen erstreckende Erhebungen und/oder sich radial nach außen erstreckende Vertiefungen, Ausnehmungen oder Durchbrüche des formstabilen Bauteilelementes im Bereich von dessen hohlförmigen Abschnitt (an-)gedrückt, wobei der Innenumfang des hohlprofilierten Abschnittes des formstabilen Bauteilelementes und der Außenumfang des hohlprofilierten Bauteilelementes miteinander übereinstimmen oder zumindest im Wesentlichen übereinstimmen.

Entsprechend den Maßnahmen des Anspruchs 21 wird das hohlprofilierte Bauteilelement von dem aufblasbaren Element bis zu dessen vollständigen Aushärten mit Druck beaufschlagt.

In diesem Zusammenhang wird das hohlprofilierte Bauteilelement nach Anspruch 22 von dem aufblasbaren Element vorzugsweise mit einem Druck von etwa 2 bis etwa 10 bar, insbesondere von etwa 4 bis etwa 8 bar, vorzugsweise von etwa 6 bar, beaufschlagt.

Diese Aufgabe wird schließlich noch in verwendungsmäßiger Hinsicht durch die Merkmale der Ansprüche 23 und 24 gelöst.

Nach Anspruch 23 findet das erfindungsgemäße Bauteil in ganz vorteilhafter Weise in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Personenbeförderungswagen, wie ein Bus oder Kleinbus, Lastkraftwagen oder Wohnmobil, Verwendung.

Ganz besonders eignet sich das erfindungsgemäße Bauteil nach Anspruch 24 zur Aufnahme und/oder Übertragung von mechanischen Kräften und/oder Momenten und insbesondere als mechanische Zug- und Druckkräfte und/oder Torsionskräfte übertragenden Streben und/oder rohr- oder stabförmige Verbindungselemente und/oder Fachwerke oder Fachwerkstrukturen und/oder Antriebswellen, vorzugsweise mit wenigstens einem oder mehreren endseitig angeordneten Anschlusselementen, Gelenkaugen, Gelenkkopf oder dergleichen Krafteinleitungs- bzw. -übertragungselementen, in Fahrzeugen, ganz bevorzugt in Flugzeugen und Raumflugkörpern als Stütz- oder Stabilisierungsstreben zur strukturellen Verstärkung einer Rumpfstruktur und in Landfahrzeugen als Stütz- oder Stabilisierungsstreben zur strukturellen Verstärkung einer Karosseriestruktur.

Weitere Vorteile und Einzelheiten der Erfindung ergeben sich aus der nachfolgenden Beschreibung bevorzugter Ausführungsformen der Erfindung sowie anhand der Zeichnungen. Hierbei zeigen:
- Fig. 1A: eine schematische perspektivische Ansicht einer Ausführungsform eines erfindungsgemäß ausgebildeten Bauteiles mit einem formstabilen Bauteilelement mit einem hohlprofilierten Abschnitt,
- Fig. 1B und 1C: eine Seitenansicht und eine horizontale Längsschnittansicht durch die Ausführungsform des erfindungsgemäß ausgebildeten formstabilen Bauteilelementes nach der Fig. 1A,
- Fig. 2: eine schematische Darstellung einer abgewickelten, aufgeschnittenen Fläche von dem Innenumfang eines formstabilen Bauteilelementes im Bereich des hohlprofilierten Abschnittes des formstabilen Bauteilelementes,
- Fig. 3A und 3B: eine schematische Querschnittsansicht durch das hohlprofilierte Bauteilelement aus faserverstärktem Kunststoff und Abwicklung von dessen Außenumfang,
- Fig. 4A bis 4D: eine schematische Querschnittsansicht durch den hohlprofilierten Abschnitt des formstabilen Bauteilelementes längs der Linie IVA-IVA in der Fig. 2 und Abwicklung von dessen Innenumfang, mit und ohne formstabilen Bauteilelement sowie schematisch längserstreckt,
- Fig. 5A: eine schematische perspektivische Ansicht einer weiteren Ausführungsform eines erfindungsgemäß ausgebildeten Bauteiles mit einem formstabilen Bauteilelement mit einem hohlprofilierten Abschnitt entsprechend der Fig. 1A,
- Fig. 5B: eine schematische Abwicklung des Innenumfanges des hohlprofilierten Abschnittes des formstabilen Bauteilelementes nach der Fig. 5A im Bereich des hohlprofilierten Abschnittes,
- Fig. 6A bis 6C: eine schematische perspektivische Ansicht, eine Seitenansicht und eine Querschnittsansicht durch eine andere Ausführungsform eines erfindungsgemäß ausgebildeten Bauteiles mit einem formstabilen Bauteilelement mit einem hohlprofilierten Abschnitt entsprechend der Fig. 1A längs der Linie VIC-VIC in der Fig. 6B,
- Fig. 6D: eine schematische Abwicklung des Innenumfanges des hohlprofilierten Abschnittes des formstabilen Bauteilelementes nach den Fig. 6A bis 6C im Bereich des hohlprofilierten Abschnittes,
- Fig. 7A und 7B: eine schematische perspektivische Ansicht und eine Seitenansicht einer noch anderen Ausführungsform eines erfindungsgemäß ausgebildeten Bauteiles mit einem formstabilen Bauteilelement mit einem hohlprofilierten Abschnitt entsprechend der Fig. 1A,
- Fig. 7C: eine schematische Abwicklung des Innenumfanges des hohlprofilierten Abschnittes des formstabilen Bauteilelementes nach den Fig. 7A und 7B im Bereich des hohlprofilierten Abschnittes, und
- Fig. 8A und 8B: schematische perspektivische Ansichten von zwei anderen Ausführungsformen eines erfindungsgemäß ausgebildeten Bauteiles mit einem formstabilen Bauteilelement als Anschluss- oder Verbindungselement in Form eines Fachwerks oder einer Fachwerkstruktur.

Bei der nachfolgenden Beschreibung von verschiedenen Ausführungsformen des erfindungsgemäßen Bauteiles 10 zur Aufnahme und/oder Übertragung von mechanischen Kräften und/oder Momenten sind einander entsprechende, gleiche Bauteile jeweils mit identischen Bezugsziffern versehen.

Das Bauteil 10 nach der Erfindung ist in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Personenbeförderungswagen, wie ein Bus oder Kleinbus, Lastkraftwagen oder Wohnmobil, vorgesehen.

Das erfindungsgemäße Bauteil 10 eignet sich ganz besonders zur Aufnahme und/oder Übertragung von mechanischen Kräften und/ oder Momenten und insbesondere als mechanische Zug- und Druckkräfte und/oder Torsionskräfte übertragenden Streben und/oder rohr- oder stabförmige Verbindungselemente und/oder Fachwerken oder Fachwerkstrukturen und/oder Antriebswellen, vorzugsweise mit wenigstens einem oder mehreren endseitig angeordneten Anschlusselementen, Gelenkaugen, Gelenkkopf oder dergleichen Krafteinleitungs- bzw. -übertragungselementen, in Fahrzeugen, ganz bevorzugt in Flugzeugen und Raumflugkörpern als Stütz- oder Stabilisierungsstreben zur strukturellen Verstärkung einer Rumpfstruktur und in Landfahrzeugen als Stütz- oder Stabilisierungsstreben zur strukturellen Verstärkung einer Karosseriestruktur.

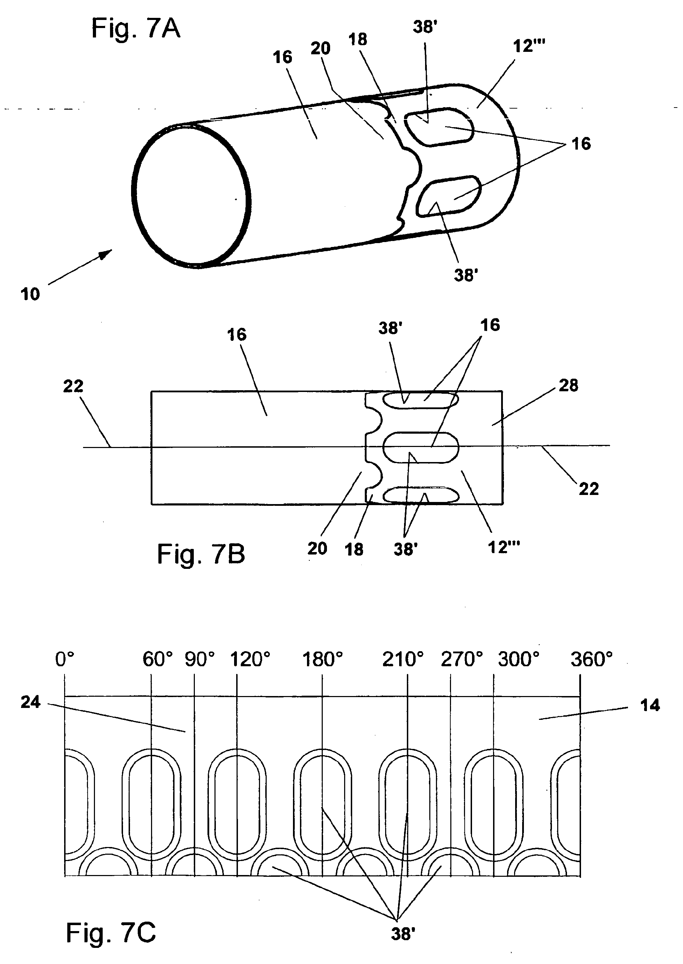

Ein erfindungsgemäß ausgebildetes Bauteil 10 umfasst wenigstens ein formstabiles Bauteilelement 12, 12', 12", 12"', 12"" mit zumindest einem hohlprofilierten Abschnitt 14 und mindestens ein hohlprofiliertes Bauteilelement 16 aus faserverstärktem Kunststoff (vgl. Fig. 7A bis 8B). Bei den nachfolgend erläuterten Ausführungsformen der Erfindung weist das hohlprofilierte Bauteilelement 16 jeweils eine hohlzylindrische oder etwa holzylindrische Form auf.

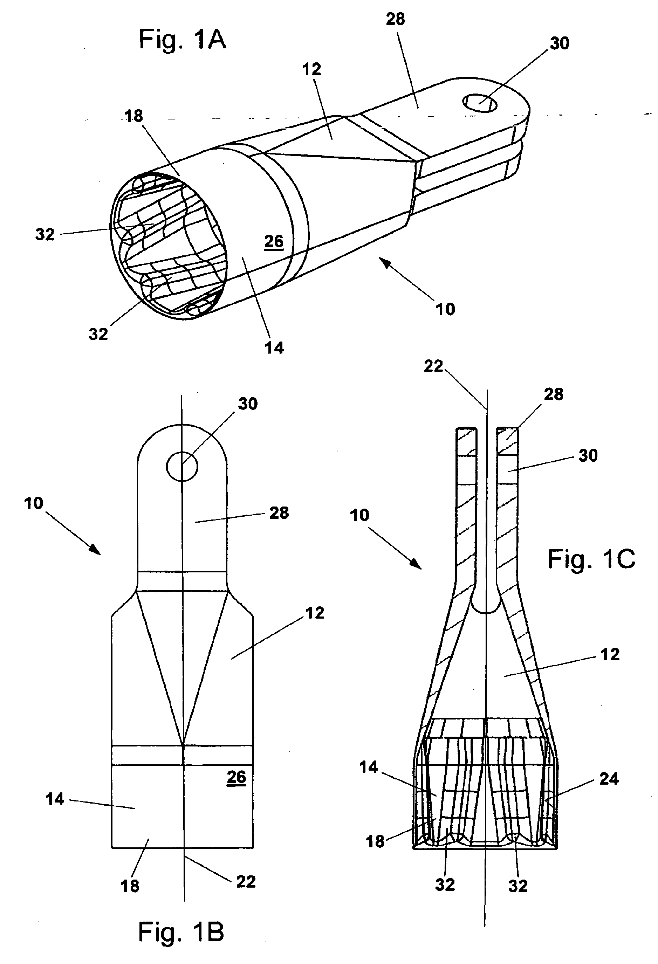

Bei den Ausführungsformen des erfindungsgemäßen Bauteiles 10 nach den Fig. 1A bis 8B sind wenigstens zwei formstabile Bauteilelemente 12, 12', 12", 12"', 12"" mit jeweils mindestens einem hohlprofilierten Abschnitt 14 und einem hohlprofilierten Bauteilelement 16 aus faserverstärktem Kunststoff vorgesehen. Das hohlprofilierte Bauteilelement 16 ist zwischen den zwei formstabilen Bauteilelementen 12 angeordnet. Auf diese Weise ist das erfindungsgemäße Bauteil 10 beispielsweise als Hybridstrebe oder als Hybridfachwerk(struktur) ausgebildet.

Da die wenigstens zwei formstabilen Bauteilelemente 12, 12', 12", 12"', 12"" genau baugleich sind, ist jedoch in der gesamten Beschreibung von verschiedenen Ausführungsformen des erfindungsgemäßen Bauteiles 10 der Einfachheit halber jeweils ein einziges formstabiles Bauteilelement 12, 12', 12", 12"', 12"" mit dem hohlprofilierten Abschnitt 14 und das hohlprofilierte Bauteilelement 16 erläutert, ohne hierauf den Schutzumfang zu beschränken.

Das hohlprofilierte Bauteilelement 16 ist teilweise von dem hohlprofilierten Abschnitt 14 des formstabilen Bauteilelementes 12, 12', 12", 12"', 12"" aufnehmbar. Ein Ende 18 des formstabilen Bauteilelementes 12, 12', 12", 12"', 12"" und ein Ende 20 des hohlprofilierten Bauteilelementes 12, welches dem Ende 18 des formstabilen Bauteilelementes 12, 12', 12", 12"', 12"" zugewandt ist, sind dabei auf deren Längsachse 22 ineinandergesteckt bzw. ineinandergeschoben. Der Innenumfang 24 des hohlprofilierten Abschnittes 14 des formstabilen Bauteilelementes 12, 12', 12", 12"', 12"" oder eines Teiles davon und der Außenumfang 26 des hohlprofilierten Bauteilelementes 16 kommen dabei zur gegenseitigen Anlage.

Das hohlprofilierte Bauteilelement 16 ist in dem hohlprofilierten Abschnitt 14 des formstabilen Bauteilelementes 12, 12', 12", 12"', 12"" formschlüssig anordnenbar. Der Innenumfang 24 des hohlprofilierten Abschnittes 14 des formstabilen Bauteilelementes 12, 12', 12", 12"', 12"" und der Außenumfang 26 des hohlprofilierten Bauteilelementes 16 sind zueinander identisch, jedenfalls im Wesentlichen identisch, d.h. korrespondieren zueinander in Form und Abmessung.

In den Fig. 1A bis 1C ist eine erste Ausführungsform eines erfindungsgemäßen Bauteiles 10 mit einem formstabilen Bauteilelement 12, das einen hohlprofilierten Abschnitt 14 umfasst, gezeigt.

Das formstabile Bauteilelement 12 ist als Anschluss- oder Verbindungselement, Fitting, Flansch, Einsteckkupplung für die Verbindung von mindestens einem hohlprofilierten Bauteilelement 16 aus faserverstärktem Kunststoff oder dergleichen Anbindungskörper oder dergleichen Kraft- und/oder Momenteneinleitungs- bzw. -übertragungselement vorgesehen und entsprechend ausgebildet. Insbesondere kann das formstabile Bauteilelement 12 dabei an einem, nämlich seinem anderen, Ende 28, welches dem Ende 18 des formstabilen Bauteilelementes 12 und somit auch dem Ende 20 des hohlprofilierten Bauteilelementes 16 abgewandt ist, zum Beispiel gabelförmig ausgestaltet und mit einem Anschlusselemment 30 in Form von zum Beispiel einem Gelenkauge, Gelenkkopf oder dergleichen ausgestattet sein.

Bei der in den Fig. 1A bis 1C gezeigten Ausführungsform sind Erhebungen 32 in dem hohlprofilierten Abschnitt 14 des formstabilen Bauteilelementes 12 vorgesehen. Die Erhebungen 32 erstrecken sich am bzw. über den Innenumfang 24 radial nach innen hin zu der Längsachse 22 des formstabilen Bauteilelementes 12 und des hohlprofilierten Bauteilelementes 16.

Bei der in den Fig. 1A bis 1C gezeigten Ausführung des formstabilen Bauteilelementes 12 des erfindungsgemäßen Bauteiles 10 ist eine Vielzahl von Erhebungen 32 vorgesehen. Die Erhebungen 32 sind im Wesentlichen länglich, langgestreckt, wulstartig, fingerförmig oder keilförmig ausgebildet. Vorzugsweise sind die Erhebungen 32, wie bei dem Ausführungsbeispiel der Fig. 1A bis 1C dargestellt, über den Innenumfang 24 des hohlprofilierten Abschnittes 14 des formstabilen Bauteilelementes 12 zueinander gleichmäßig beabstandet angeordnet. Durch eine solche gleichmäßige Teilung wird eine gleichmäßig verteilte Kraft- und Momentenaufnahme bzw. -einleitung und/oder -übertragung über den gesamten Innenumfang 24 des hohlprofilierten Abschnittes 14 des formstabilen Bauteilelementes 12 und Außenumfang 26 des hohlprofilierten Bauteilelementes 16 erhalten.

Wie in den Fig. 1A und 1C angedeutet ist, sind die Erhebungen 32 weiterhin mit stetigen Übergängen zu dem/den angrenzenden bzw. dazu benachbarten Bereich/en ausgestattet. Mit anderen Worten gehen die Erhebungen 32 stetig, d.h. "sanft" bzw. "geschmeidig", in den/die angrenzenden bzw. dazu benachbarten Bereich/e über bzw. laufen insoweit aus. Kantige, eckige oder scharfe Übergänge, welche schnell zu einer Beschädigung des faserverstärkten Kunststoffes und damit zu einem Versagen des gesamten Bauteilelementes 12 führen können, sind ausgeschlossen.

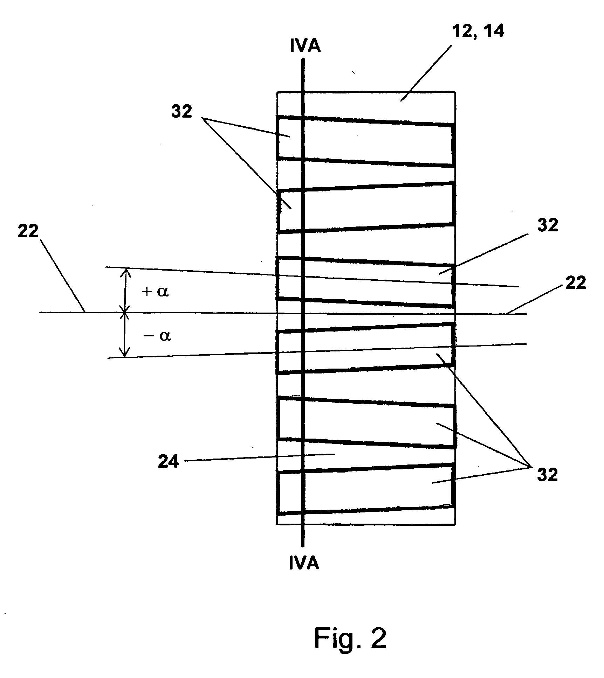

Wie insbesondere aus der Fig. 2, die eine schematische Abwicklung des Innenumfanges 24 des formstabilen Bauteilelementes 12 zeigt, entnehmbar ist, sind beispielhaft sechs Erhebungen 32 vorgesehen. Die Erhebungen 32 sind länglich ausgebildet und in einem Winkel ± α zu der Längsachse 22 des formstabilen Bauteilelementes 12 und des hohlprofilierten Bauteilelementes 16 angeordnet. Infolge der Anordnung der Erhebungen 32 in einem Winkel ± α können Zug-, Druck- und Torsionskräfte übertragen werden.

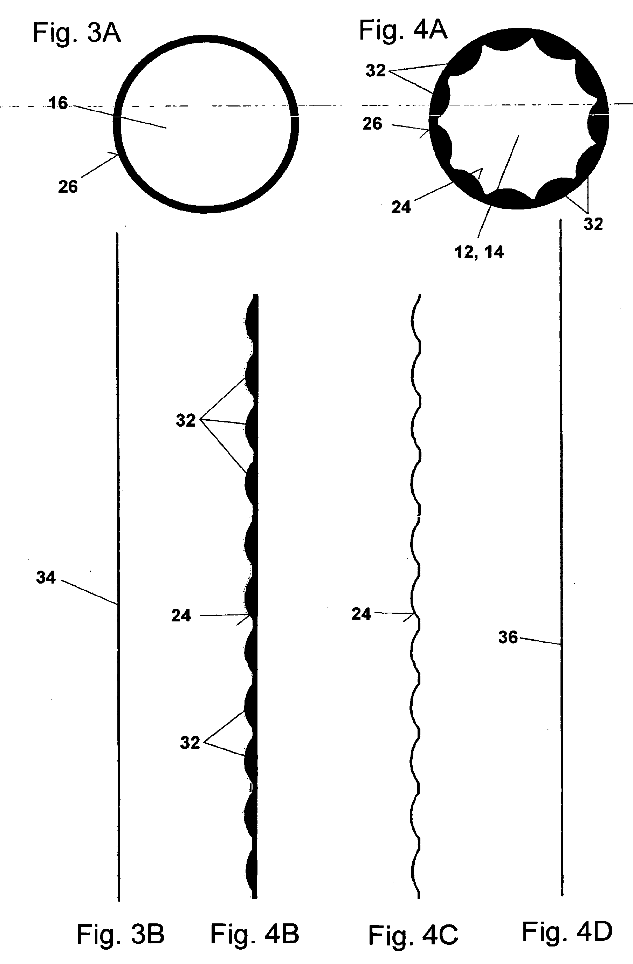

Die Fig. 3A und 3B sowie 4A bis 4D veranschaulichen die Bauweise des erfindungsgemäßen Bauteiles 10 weiter. So weisen der Innenumfang 24 des hohlprofilierten Abschnittes 14 des formstabilen Bauteilelementes 12 und der Außenumfang 26 des hohlprofilierten Bauteilelementes 16 bei einer Abwicklung eines jeden Querschnittes durch den hohlprofilierten Abschnitt 14 des formstabilen Bauteilelementes 12 und das hohlprofilierte Bauteilelement 16 senkrecht zu deren Längsachse 22 eine gleiche oder im Wesentlichen gleiche Länge 34 bzw. 36 auf.

Den Fig. 3A bis 4D könnte beispielsweise ein Querschnitt durch den hohlprofilierten Abschnitt 14 des formstabilen Bauteilelementes 12 und das hohlprofilierte Bauteilelement 16 vergleichbar zu der Linie IVA-IVA in der Fig. 2 zugrundeliegen.

In der Fig. 3A ist das hohlprofilierte Bauteilelement 16 im Querschnitt schematisch dargestellt. Der sich daraus ergebende Außenumfang 26 ist in der Fig. 3B abgewickelt und ergibt die Länge 34.

In der Fig. 4A ist das formstabile Bauteilelement 12 im Bereich des hohlprofilierten Abschnittes 14 im Querschnitt schematisch dargestellt. Am Innenumfang 24 des Abschnittes 14 sind insgesamt elf Erhebungen 32 gleichmäßig verteilt angeordnet. Der sich daraus ergebende Innenumfang 24 ist in der Fig. 4B zusammen mit den Erhebungen 32 abgewickelt. Der sich daraus ergebende Innenumfang 24 ist in der Fig. 4C ohne die Erhebungen 32 abgewickelt und ergibt nach Längserstreckung gemäß der Fig. 4D die Länge 36. Die Längen 34 und 36 sind gleich, sind jedenfalls unter Berücksichtigung von geringfügigen, allerdings niemals auszuschließenden Toleranzungenauigkeiten oder Toleranzabweichungen bei der Fertigung im Wesentlichen und damit annähernd gleich.

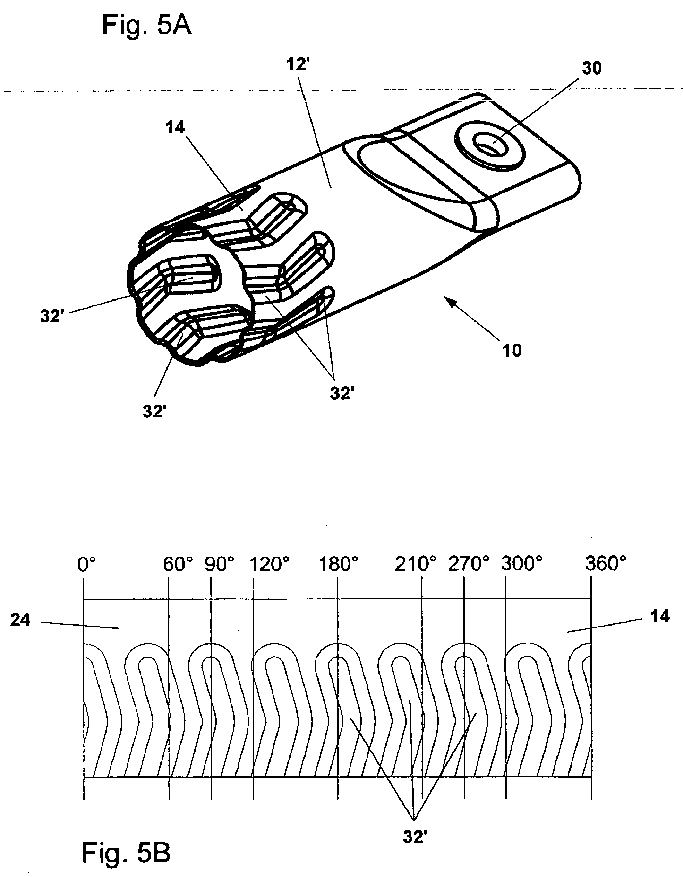

In den Fig. 5A und 5B ist eine weitere Ausführungsform eines erfindungsgemäßen Bauteiles 10 mit einem formstabilen Bauteilelementes 12' gezeigt.

Bei der in den Fig. 5A und 5B gezeigten Ausführung des formstabilen Bauteilelementes 12' sind Erhebungen 32' vorgesehen, die sich radial nach innen erstrecken, abgewinkelt oder mäanderförmig (nicht dargestellt) ausgebildet und axial bzw. parallel zur Längsachse 22 des formstabilen Bauteilelementes 12 und des hohlprofilierten Bauteilelementes 16 angeordnet sind. Die Erhebungen 32' sind zum Beispiel um einen Winkel von 10° gegenüber der Längsachse 22 gegenläufig verdrillt. Durch die abgewinkelte Ausbildung der Erhebungen 32' sind ebenfalls Zug-, Druck- und Torsionskräfte übertragbar.

Ein zusätzlicher konstruktiver Unterschied gegenüber der Ausführungsform der Fig. 1A bis 1C besteht darin, dass das formstabile Bauteilelement 12' bei der Ausführungsform der Fig. 5A und 5B in Blechbauweise verwirklicht ist, während die Ausführungsform des erfindungsgemäßen Bauteiles 10 gemäß den Fig. 1A bis 1C als integrales Frästeil ausgebildet ist.

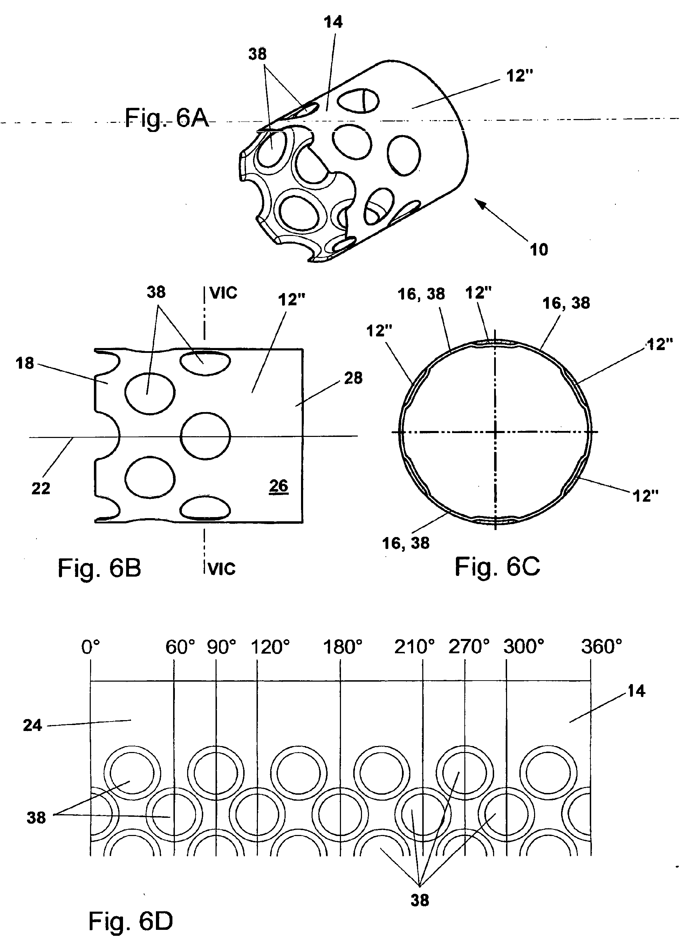

In den Fig. 6A bis 6D ist eine andere Ausführungsform eines erfindungsgemäßen Bauteiles 10 mit einem formstabilen Bauteilelement 12" vorgeschlagen.

In alternativer oder kumulativer Ausgestaltung zu den Erhebungen 32, 32' entsprechend den Ausführungsbeispielen des erfindungsgemäßen Bauteiles 10, die in den Fig. 1A bis 1C und 5A, 5B vorgestellt sind, können Vertiefungen 38, Ausnehmungen oder Durchbrüche, die sich radial nach außen erstrecken, in dem hohlprofilierten Abschnitt 14 des formstabilen Bauteilelementes 12" angeordnet sein.

Mittels solcher Vertiefungen 38, Ausnehmungen oder Durchbrüche lässt sich gleichermaßen ein Formschluss, wie bei den zuvor erläuterten Ausführungsbeispielen der Fig. 1A bis 1C und 5A, 5B anhand der Erhebungen 32, 32', realisieren, wobei der Innenumfang 24 des hohlprofilierten Abschnittes 14 des formstabilen Bauteilelementes 12" und der Außenumfang 26 des hohlprofilierten Bauteilelementes 16 gleichsam miteinander übereinstimmen oder wiederum zumindest im Wesentlichen übereinstimmen.

Die sich radial nach außen erstreckenden Vertiefungen 38, Ausnehmungen oder Durchbrüche sind ebenfalls über den Innenumfang 24 des hohlprofilierten Abschnittes 14 des formstabilen Bauteilelementes 12" zueinander gleichmäßig beabstandet angeordnet. Wie aus den Fig. 6A bis 6D ersichtlich, sind die Vertiefungen 38, Ausnehmungen oder Durchbrüche bei diesem Ausführungsbeispiel kreisförmig ausgebildet. Dadurch lassen sich ebenfalls Zug-, Druck- und Torsionskräfte übertragen.

Die Fig. 6A bis 6D zeigen weiter, dass zwei Reihen von Vertiefungen 38, Ausnehmungen oder Durchbrüche vorgesehen sind, die zusätzlich über den Innenumfang 24 zueinander axial zur Längsachse 22 des formstabilen Bauteilelementes 12" und des hohlprofilierten Bauteilelementes 16 versetzt angeordnet sind.

In den Fig. 7A und 7B ist eine noch andere Ausführungsform eines erfindungsgemäßen Bauteiles 10 mit einem formstabilen Bauteilelement 12"' dargestellt.

Bei der in den Fig. 7A und 7B gezeigten Ausführung des formstabilen Bauteilelementes 12"' sind auch Vertiefungen 38', Ausnehmungen oder Durchbrüche verwirklicht. Die Vertiefungen 38' sind länglich bzw. in Form eines Langloches ausgebildet und axial zu der Längsachse 22 des formstabilen Bauteilelementes 12'" und des hohlprofilierten Bauteilelementes 16 angeordnet. Mit dieser Ausführungsform können insoweit gleichermaßen Zug-, Druck- und Torsionskräfte übertragen werden.

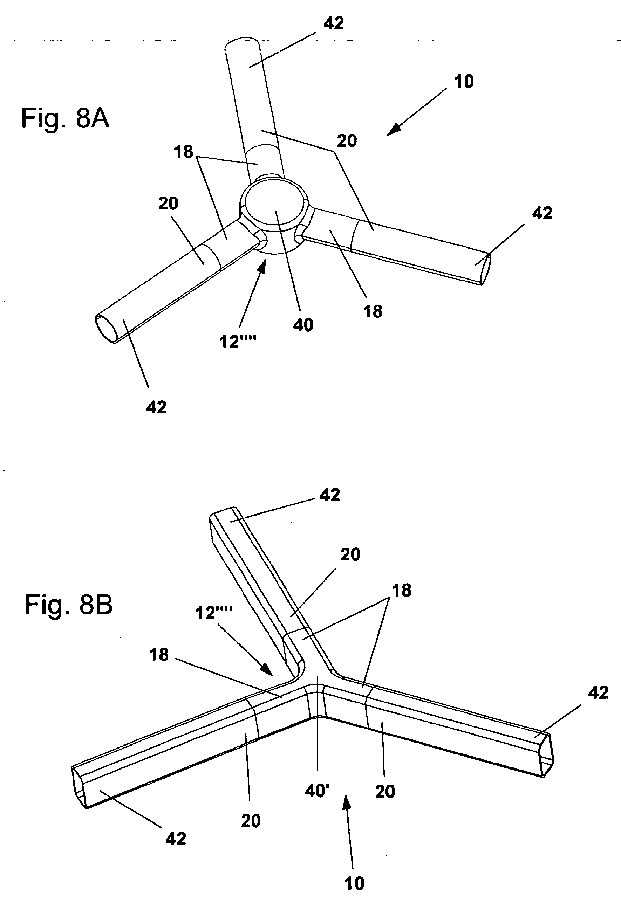

In den Fig. 8A und 8B sind schließlich noch andere Ausführungsbeispiele eines erfindungsgemäßen Bauteiles 10 mit einem formstabilen Bauteilelement 12"" in Form eines Fachwerks oder einer Fachwerkstruktur bzw. für ein Fachwerk oder eine Fachwerkstruktur dargestellt. Dabei ist ein mittiges Knotenelement 40, 40' vorgesehen, von welchem jeweils mindestens zwei, hier insgesamt drei, hohlprofilierte Bauteilelemente 16 mit ihrem einen Ende 20 aufgenommen und abgestützt sind. Die drei hohlprofilierten Bauteilelemente 16 erstrecken sich jeweils etwa sternförmig von dem zugeordneten Knotenelement 40, 40' nach außen weg und münden an deren anderem Ende 42 in gesonderte formstabile Bauteilelemente 12, 12', 12", 12"', 12"" (nicht dargestellt). Bei diesen Bauteilelementen 12, 12', 12", 12"', 12"" kann es sich in Abhängigkeit des individuellen Verwendungszweckes um separate Bauteilelemente 12, 12', 12", 12"' etc. oder um weitere Bauteilelemente 12"" mit Knotenelementen 40, 40' handeln.

Die beiden Ausführungsformen des Bauteiles 10 nach den Fig. 8A und 8B unterscheiden sich voneinander lediglich in der Form der Knotenelemente 40, 40' der Bauteilelemente 12"" zueinander, in der Form des Querschnittes der hohlprofilierten Bauteilelemente 16, die einmal rohrförmig und einmal viereckig bzw. achteckig ausgestaltet sind, und in der Winkelanordnung der Bauteilelemente 12"" zueinander, d.h. mit einer regelmäßigen Teilung von jeweils 120° bzw. mit einer unregelmäßigen Teilung von 100°, 130° und 130°.

Ohne im Einzelnen dargestellt zu sein, ist es ebenso möglich, die sich radial nach innen erstreckenden Erhebungen 32, 32' und/oder die sich radial nach außen erstreckenden Vertiefungen 38, 38', Ausnehmungen oder Durchbrüche in beliebig anderer Anordnung und Ausbildung, als in den durch die Fig. 1A bis 8B vorgestellten Ausführungen, auszugestalten, beispielsweise länglich, langgestreckt, wulstartig, fingerförmig, mäanderförmig, keilförmig, abgewinkelt, kreisförmig, ellipsenförmig, elliptisch, oval, dreieckig, viereckig, quadratisch oder rechteckig, vieleckig, trapezförmig, parallelogrammförmig oder polygonförmig und/oder als Kombination daraus auszubilden und/oder axial und/oder in einem Winkel ± α zur Längsachse 22 des formstabilen Bauteilelementes 12, 12', 12", 12"', 12"" und des hohlprofilierten Bauteilelementes 16 anzuordnen.

Das formstabile Bauteilelement 12, 12', 12", 12"', 12"" und das hohlprofilierte Bauteilelement 16 weisen zweckmäßigerweise einen Außenumfang 26 von gleicher Form und Abmessung auf. Dies trifft jedenfalls auf das formstabile Bauteilelement 12 wenigstens teilweise für einen Bereich von dessen hohlprofilierten Abschnitt 14 zu.

Das formstabile Bauteilelement 12, 12', 12", 12"', 12"" und/oder das hohlprofilierte Bauteilelement 16 ist/sind leichtbauend ausgebildet und/oder korrosionsbeständig.

Das formstabile Bauteilelement 12, 12', 12", 12"', 12"" selbst ist aus Metall, insbesondere aus Stahl, Edelstahl, Aluminium, Titan, einer Legierung daraus gebildet. Ungeachtet dessen kann das formstabile Bauteilelement 12 alternativ oder kumulativ aus Kunststoff, insbesondere aus Polyimid (PI), Polyoximethylen (POM) oder Polytetrafluorethylen (PTFE), ohne oder mit Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfaserverstärkung, und/oder einer Kombination daraus gebildet.

Des Weiteren ist das formstabile Bauteilelement 12, 12', 12", 12"', 12"" durch Fräsen, Drehen, Schleifen oder dergleichen Flächenbearbeitung, Gießen oder Feingießen, Ziehen oder Tiefziehen und/oder, insbesondere anschließendes, Verschweißen und/oder einer Kombination daraus herstellbar. Beispielsweise ist es denkbar, Komponenten des formstabilen Bauteilelementes 12 zunächst mittels Spanbearbeitung zu fertigen und diese gefertigten Komponenten sodann miteinander zu verschweißen. Ebenso ist es möglich, Komponenten des formstabilen Bauteilelementes 12 zunächst zu ziehen bzw. tiefzuziehen, im Anschluss daran miteinander zu verschweißen und schließlich einer nochmaligen Flächenbearbeitung durch Fräsen, Drehen oder Schleifen zu unterziehen.

Das hohlprofilierte Bauteilelement 16 aus faserverstärktem Kunststoff selbst ist mit Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfasern und/oder einer Kombination daraus verstärkt. Alternativ oder kumulativ kann das hohlprofilierte Bauteilelement 16 auch aus Faserverbundwerkstoff gebildet sein.

Das hohlprofilierte Bauteilelement 16 aus faserverstärktem Kunststoff ist durch ein Prepreg-Verfahren, Nassimprägnierungsverfahren oder Resin Transfer Molding (RTM)-Verfahren und/oder einer Kombination daraus oder dergleichen Verfahren zur Fertigung von Faserverbundkörpern herstellbar.

Weiterhin ist das hohlprofilierte Bauteilelement 16 aus faserverstärktem Kunststoff im Querschnitt rund, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet.

Die Herstellung der in den Fig. 1 bis 7C dargestellten Ausführungsformen des erfindungsgemäßen Bauteiles 10 wird nachfolgend näher erläutert:

Das hohlprofilierte Bauteilelement 16 wird mit dem Ende 20 teilweise in den-hohlprofilierten Abschnitt 14 des formstabilen Bauteilelementes 12, 12', 12", 12"' an dessen Ende 18 hineingeschoben und von dem hohlprofilierten Abschnitt 14 des formstabilen Bauteilelementes 12 aufgenommen.

Vor dem teilweisen Hineinstecken bzw. Hineinschieben mit dessen Ende 20 in den hohlprofilierten Abschnitt 14 des formstabilen Bauteilelementes 12, 12', 12", 12"' wird das hohlprofilierte Bauteilelement 16 radial verformt. Das hohlprofilierte Bauteilelement 16 ist zu diesem Zeitpunkt noch ungehärtet und insoweit flexibel und deformierbar. Bei der bzw. durch die radiale Verformung ist/wird der Außenumfang 26 des hohlprofilierten Bauteilelementes 16 kurzzeitig kleiner als der Innenumfang 24, insbesondere als die an dem Innenumfang 24 angeordneten, sich radial nach innen erstreckenden Erhebungen 32, 32', des formstabilen Bauteilelementes 12 im Bereich von dessen hohlförmigen Abschnitt 14.

Nach dem teilweisen Hineinstecken bzw. Hineinschieben entspannt sich das hohlprofilierte Bauteilelement 16 wieder geringfügig in dem hohlprofilierten Abschnitt 14 des formstabilen Bauteilelementes 12, 12', 12", 12"' und verformt sich zurück. Das hohlprofilierte Bauteilelement 16 legt sich mit seinem Außenumfang 26 an dem Innenumfang 24 bzw. an den am Innenumfang 24 angeordneten Erhebungen 32, 32', die radial nach innen zur Längsachse 22 hineinragen, und/oder Vertiefungen 38, 38', Ausnehmungen oder Durchbrüche, die radial nach außen von der Längsachse 22 wegerstrecken, des formstabilen Bauteilelementes 12, 12', 12", 12"' (leicht) an.

Anschließend wird ein aufblasbares Element (nicht dargestellt), zum Beispiel ein aufblasbarer Schlauch, in das hohlprofilierte Bauteilelement 16 eingebracht bzw. eingeführt. Das aufblasbare Element wird nach dessen Einbringen in das hohlprofilierte Bauteilelement 16 aufgeblasen. Hierdurch wird das hohlprofilierte Bauteilelement 16 von dem aufblasbaren Element mit seinem Außenumfang 26 formschlüssig an den Innenumfang 24 des formstabilen Bauteilelementes 12, 12', 12", 12"' im Bereich von dessen hohlförmigen Abschnitt 14 (an-)gedrückt bzw. angepresst.

Das hohlprofilierte Bauteilelement 16 wird mit seinem Außenumfang 26 formschlüssig an den Innenumfang 24 und an den Erhebungen 32, 32' und/oder Vertiefungen 38, 38', Ausnehmungen oder Durchbrüchen des formstabilen Bauteilelementes 12, die an dem Innenumfang 24 im Bereich von dem hohlförmigen Abschnitt 14 angeordnet sind und sich radial nach innen bzw. nach außen erstrecken, (an-)gedrückt. Dabei stimmen der Innenumfang 24 des hohlprofilierten Abschnittes 14 des formstabilen Bauteilelementes 12, 12', 12", 12"' und der Außenumfang 26 des hohlprofilierten Bauteilelementes 16 miteinander überein oder zumindest im Wesentlichen überein.

Das Anformen bzw. Anlegen erfolgt somit ohne Falten des hohlprofilierten Bauteilelementes 16. Die Fasern des hohlprofilierten Bauteilelementes 16 werden folglich nicht geknickt, gestaucht, verzogen oder in sonstiger Weise einer ständigen Beaufschlagung unterworfen.

Das hohlprofilierte Bauteilelement 16 wird von dem aufblasbaren Element bis zu dessen vollständigen Aushärten mit Druck beaufschlagt. Um eine gegenseitige Anlage bzw. Anformung von dem hohlprofilierten Bauteilelement 16 an dem formstabilen Bauteilelement 12, 12', 12", 12"' sicherzustellen, wird das hohlprofilierte Bauteilelement 16 von dem aufblasbaren Element mit einem Druck von etwa 2 bis etwa 10 bar, insbesondere von etwa 4 bis etwa 8 bar, beaufschlagt. Ganz bevorzugt hat sich in der Praxis ein Druck von ungefähr 6 bar erwiesen.

Nach dem Aushärten wird das aufblasbare Element wieder aus dem hohlprofilierten Bauteilelemente 16 herausgezogen und das Bauteil 10 seiner weiterhin vorgesehen Bearbeitung bzw. Verarbeitung zugeführt.

Die Herstellung der in den Fig. 8A und 8B dargestellten Ausführungsformen des erfindungsgemäßen Bauteiles 10 erfolgt entsprechend, allerdings durch wiederholte Handhabung, nachdem das formstabile Bauteilelement 12"" mehrere solcher Knotenelemente 40, 40', und umgekehrt, aufweist.

Die Erfindung ist nicht auf die dargestellten Ausführungsformen des erfindungsgemäßen Bauteiles 10 beschränkt. So ist es ohne weiteres möglich, das erfindungsgemäße Bauteil 10 mit einem formstabilen Bauteilelement in Form einer Einsteckkupplung (nicht dargestellt) für die Verbindung von zwei hohlprofilierten Bauteilelementen 16 aus faserverstärktem Kunststoff auszustatten. Die zwei hohlprofilierten Bauteilelementen 16 wiederum sind dann jeweils an ihrem der Einsteckkupplung abgewandten Ende mit einem formstabilen Bauteilelement 12 versehen, das mit einem Anschlusselement 30 in Form eines Gelenkauges, Gelenkkopfes oder dergleichen Kraft- und/oder Momenteneinleitungs- bzw. -übertragungselementes als Anbindungskörper fungiert. Auf diese Weise lässt sich die Länge des erfindungsgemäßen Bauteiles 10 beliebig variieren.

Darüber hinaus ist es ohne weiteres möglich und liegt gleichermaßen im Schutzbereich der Erfindung, dass das erfindungsgemäße Bauteil 10 bzw. das formstabile Bauteilelement 12, 12', 12", 12"', 12"" und/oder das hohlprofilierte Bauteilelement 16 aus faserverstärktem Kunststoff, insbesondere vollständig oder teilweise, länglich, langgestreckt, geschwungen, mäanderförmig, wellenförmig, schlangenförmig, abgewinkelt, (halb-)kreisförmig, (halb-)ellipsenförmig, gebogen, gekrümmt und/oder als Kombination daraus geformt ist/sind. Die Form von Bauteil 10 bzw. formstabilen Bauteilelement 12, 12', 12", 12"', 12"" und/oder hohlprofilierten Bauteilelement 16 ist beliebig und an die jeweilige Verwendung und Funktion sowie die räumlichen Vorgaben individuell anpassbar. Folglich kann/können sich das Bauteil 10 bzw. das formstabile Bauteilelement 12, 12', 12'', 12"', 12"" und/oder das hohlprofilierte Bauteilelement 16 über dessen/deren vollständige Länge oder über einen Teil davon im Wesentlichen axial oder achspaallel erstrecken und/oder in sonstiger, davon abweichender Weise beliebig andere räumliche Formen aufweisen. Ohne im Einzelnen dargestellt zu sein, kann/können das Bauteil 10 bzw. das formstabile Bauteilelement 12, 12', 12", 12"', 12"" und/oder das hohlprofilierte Bauteilelement 16, Insbesondere vollständig oder teilweise, in wenigstens einer räumlichen Ebene angeordnet sein. Mit anderen Worten kann/können sich das Bauteil 10 bzw. das formstabile Bauteilelement 12, 12', 12", 12"', 12"" und/oder das hohlprofilierte Bauteilelement 16 in einer einzigen räumlichen Ebene oder in mehreren, insbesondere in zwei oder drei, räumlichen Ebenen erstrecken, und zwar beliebigerweise vollständig oder teilweise. Dies ist vor allem dann von Vorteil, um das erfindungsgemäße Bauteil 10 insgesamt als Anschluss- oder Verbindungselement, Fitting, Flansch, Einsteckkupplung für die Verbindung von mindestens einem hohlprofilierten Bauteilelement 16 aus faserverstärktem Kunststoff, Knotenelement 40, 40' für ein Fachwerk oder eine Fachwerkstruktur oder dergleichen Anbindungskörper, insbesondere mit einem Gelenkauge, Gelenkkopf oder dergleichen Krafteinleitungs- oder -übertragungselement, auszubilden.

Ohne im Einzelnen dargestellt zu sein, ist es schließlich auch jederzeit denkbar, die Erhebungen 32, 32' und/oder die Vertiefungen 38, 38', Ausnehmungen oder Durchbrüche der zuvor erläuterten, verschiedenen Ausführungsformen des erfindungsgemäßen Bauteiles 10 hinsichtlich deren Anzahl, Teilung, Anordnung, Ausbildung, Form und Abmessung in beliebiger Weise zu variieren und/oder ebenso untereinander zu kombinieren. Schließlich können die sich radial nach innen erstreckenden Erhebungen 32, 32' und/oder die sich radial nach außen erstreckenden Vertiefungen 38, 38', Ausnehmungen oder Durchbrüche beliebig geformt sein, insbesondere zum Beispiel länglich, langgestreckt, wulstartig, fingerförmig, mäanderförmig, keilförmig, abgewinkelt, kreisförmig, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet sein.

## Patentansprüche

1. Bauteil zur Aufnahme und/oder Übertragung von mechanischen Kräften und/oder Momenten umfassend wenigstens ein formstabiles Bauteilelement (12, 12', 12", 12"', 12"") mit zumindest einem hohlprofilierten Abschnitt (14) und mindestens ein hohlprofiliertes Bauteilelement (16) aus faserverstärktem Kunststoff, das teilweise von dem hohlprofilierten Abschnitt (14) des formstabilen Bauteilelementes (12, 12', 12", 12"', 12"") aufgenommen ist, **dadurch gekennzeichnet, dass** das mindestens eine hohlprofilierte Bauteilelement (16) aus faserverstärktem Kunststoff in dem hohlprofilierten Abschnitt (14) des formstabilen Bauteilelementes (12, 12', 12", 12"', 12"") über sich radial nach innen erstreckende Erhebungen (32, 32') und/oder sich radial nach außen erstreckende Vertiefungen (38, 38'), Ausnehmungen oder Durchbrüche in dem hohlprofilierten Abschnitt (14) des formstabilen Bauteilelementes zur Aufnahme und/oder Übertragung von mechanischen Zug-, Druck- und Torsionskräften und/oder der Momente durch (An-)Drücken des hohlprofilierten Bauteilelementes (16) mit seinem Außenumfang (26) formschlüssig an den Innenumfang (24) und an den Erhebungen (32, 32') und/oder Vertiefungen (38, 38'), Ausnehmungen oder Durchbrüche des formstabilen Bauteilelementes (12), die an dem Innenumfang (24) im Bereich von dem hohlförmigen Abschnitt (14) angeordnet sind und sich radial nach innen bzw. nach außen erstrecken, angeordnet ist, wobei der Innenumfang (24) des hohlprofilierten Abschnittes (14) des formstabilen Bauteilelementes (12, 12', 12", 12"', 12"") und der Außenumfang (26) des hohlprofilierten Bauteilelementes (16) aus faserverstärktem Kunststoff miteinander übereinstimmen oder zumindest im Wesentlichen übereinstimmen.

2. Bauteil nach Anspruch 1, **dadurch gekennzeichnet, dass** die sich radial nach innen erstreckenden Erhebungen (32, 32') und/oder die sich radial nach außen erstreckenden Vertiefungen (38, 38'), Ausnehmungen oder Durchbrüche über den Innenumfang (24) des hohlprofilierten Abschnittes (14) des formstabilen Bauteilelementes (12, 12', 12", 12"', 12"") zueinander gleichmäßig beabstandet angeordnet sind.

3. Bauteil nach Anspruch 1 oder 2, **dadurch gekennzeichnet, dass** die sich radial nach innen erstreckenden Erhebungen (32, 32') und/oder die sich radial nach außen erstreckenden Vertiefungen (38, 38'), Ausnehmungen oder Durchbrüche länglich, langgestreckt, wulstartig, fingerförmig, mäanderförmig, keilförmig, abgewinkelt, kreisförmig, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet sind.

4. Bauteil nach einem der Ansprüche 1 bis 3, **dadurch gekennzeichnet, dass** die sich radial nach innen erstreckenden Erhebungen (32, 32') und/oder die sich radial nach außen erstreckenden Vertiefungen (38, 38'), Ausnehmungen oder Durchbrüche axial und/oder in einem Winkel (± α) zu der Längsachse (22) des formstabilen Bauteilelementes (12, 12', 12", 12"', 12"") und des hohlprofilierten Bauteilelementes (16) angeordnet sind.

5. Bauteil nach einem der Ansprüche 1 bis 4, **dadurch gekennzeichnet, dass** die sich radial nach innen erstreckenden Erhebungen (32, 32') und/oder die sich radial nach außen erstreckenden Vertiefungen (38, 38'), Ausnehmungen oder Durchbrüche über den Innenumfang (24) des hohlprofilierten Abschnittes (14) des formstabilen Bauteilelementes (12, 12', 12", 12"', 12"") zueinander axial zur Längsachse (22) des formstabilen Bauteilelementes (12, 12', 12", 12"', 12"") und des hohlprofilierten Bauteilelementes (16) versetzt angeordnet sind.

6. Bauteil nach einem der Ansprüche 1 bis 5, **dadurch gekennzeichnet, dass** die sich radial nach innen erstreckenden Erhebungen (32, 32') und/oder die sich radial nach außen erstreckenden Vertiefungen (38, 38'), Ausnehmungen oder Durchbrüche mit stetigen Übergängen zu den bzw. in den/die angrenzenden oder dazu benachbarten Bereich/e/n ausgebildet sind.

7. Bauteil nach einem der Ansprüche 1 bis 6, **dadurch gekennzeichnet, dass** der Innenumfang (24) des hohlprofilierten Abschnittes (14) des formstabilen Bauteilelementes (12) und der Außenumfang (26) des hohlprofilierten Bauteilelementes (16) bei einer Abwicklung eines jeden Querschnittes durch den hohlprofilierten Abschnitt (14) des formstabilen Bauteilelementes (12, 12', 12", 12"', 12"") und das hohlprofilierte Bauteilelement (16) senkrecht zu deren Längsachse (22) eine gleiche oder im Wesentlichen gleiche Länge (34, 36) aufweisen.

8. Bauteil nach einem der Ansprüche 1 bis 7, **dadurch gekennzeichnet, dass** das formstabile Bauteilelement (12, 12', 12", 12"', 12"") wenigstens teilweise, insbesondere in einem Bereich von dessen hohlprofilierten Abschnitt (14), und das hohlprofilierte Bauteilelement (16) einen Außenumfang (26) von gleicher Form und Abmessung aufweisen.

9. Bauteil nach einem der Ansprüche 1 bis 8, **dadurch gekennzeichnet, dass** das formstabile Bauteilelement (12, 12', 12", 12"', 12"") und/oder das hohlprofilierte Bauteilelement (16) leichtbauend ausgebildet und/oder korrosionsbeständig ist/sind.

10. Bauteil nach einem der Ansprüche 1 bis 9, **dadurch gekennzeichnet, dass** das formstabile Bauteilelement (12, 12', 12", 12"', 12"") aus Metall, insbesondere aus Stahl, Edelstahl, Aluminium, Titan, einer Legierung daraus, und/oder aus Kunststoff, insbesondere aus Polyimid (PI), Polyoximethylen (POM) oder Polytetrafluorethylen (PTFE), ohne oder mit Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfaserverstärkung, und/oder einer Kombination daraus gebildet ist.

11. Bauteil nach einem der Ansprüche 1 bis 10, **dadurch gekennzeichnet, dass** das formstabile Bauteilelement (12, 12', 12", 12"', 12"") durch Fräsen, Drehen, Schleifen oder dergleichen Flächenbearbeitung, Gießen oder Feingießen, Ziehen oder Tiefziehen und/oder, insbesondere anschließendes, Verschweißen und/oder einer Kombination daraus herstellbar ist.

12. Bauteil nach einem der Ansprüche 1 bis 11, **dadurch gekennzeichnet, dass** das formstabile Bauteilelement (12, 12', 12", 12"', 12"") als Anschluss- oder Verbindungselement (30), Fitting, Flansch, Einsteckkupplung für die Verbindung von mindestens einem hohlprofilierten Bauteilelement (16) aus faserverstärktem Kunststoff, Knotenelement (40, 40') für ein Fachwerk oder eine Fachwerkstruktur oder dergleichen Anbindungskörper, insbesondere mit einem Gelenkauge, Gelenkkopf oder dergleichen Krafteinleitungs- oder - übertragungselement, ausgebildet ist.

13. Bauteil nach einem der Ansprüche 1 bis 12, **dadurch gekennzeichnet, dass** das hohlprofilierte Bauteilelement (16) aus faserverstärktem Kunststoff mit Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfasern und/oder einer Kombination daraus verstärkt ist und/oder aus Faserverbundwerkstoff gebildet ist.

14. Bauteil nach einem der Ansprüche 1 bis 13, **dadurch gekennzeichnet, dass** das hohlprofilierte Bauteilelement (16) aus faserverstärktem Kunststoff durch ein Prepreg-Verfahren, Nassimprägnierungsverfahren oder Resin Transfer Molding (RTM) -Verfahren und/oder einer Kombination daraus oder dergleichen Verfahren zur Fertigung von Faserverbundkörpern herstellbar ist.

15. Bauteil nach einem der Ansprüche 1 bis 14, **dadurch gekennzeichnet, dass** das hohlprofilierte Bauteilelement (16) aus faserverstärktem Kunststoff im Querschnitt rund, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet ist.

16. Bauteil nach einem der Ansprüche 1 bis 15, **dadurch gekennzeichnet, dass** das formstabile Bauteilelement (12, 12', 12", 12"', 12"") und/oder das hohlprofilierte Bauteilelement (16) aus faserverstärktem Kunststoff, insbesondere vollständig oder teilweise, länglich, langgestreckt, geschwungen, mäanderförmig, wellenförmig, schlangenförmig, abgewinkelt, (halb-)kreisförmig, (halb-)ellipsenförmig, gebogen, gekrümmt und/oder als Kombination daraus geformt ist/sind.

17. Bauteil nach einem der Ansprüche 1 bis 15, **dadurch gekennzeichnet, dass** das formstabile Bauteilelement (12, 12', 12", 12"', 12"") und/oder das hohlprofilierte Bauteilelement (16) aus faserverstärktem Kunststoff, insbesondere vollständig oder teilweise, in wenigstens einer räumlichen Ebene angeordnet ist/sind.

18. Verfahren zur Herstellung eines Bauteiles zur Aufnahme und/oder Übertragung von mechanischen Kräften und/oder Momenten umfassend wenigstens ein formstabiles Bauteilelement (12, 12', 12", 12"', 12"") mit einem hohlprofilierten Abschnitt (14) und mindestens ein hohlprofiliertes Bauteilelement (16) aus faserverstärktem Kunststoff nach einem der vorhergehenden Ansprüche, wobei das mindestens eine hohlprofilierte Bauteilelement (16) aus faserverstärktem Kunststoff mit einem Ende (20) teilweise in den hohlprofilierten Abschnitt (14) des formstabilen Bauteilelementes (12, 12', 12", 12"', 12"") hineingeschoben und von dem hohlprofilierten Abschnitt (14) des formstabilen Bauteilelementes (12) aufgenommen wird und anschließend von einem in das hohlprofilierte Bauteilelement (16) aus faserverstärktem Kunststoff eingebrachten aufblasbaren Element mit seinem Außenumfang (26) formschlüssig an den Innenumfang (24) des formstabilen Bauteilelementes (12) im Bereich von dessen hohlförmigen Abschnitt (14) (an-)gedrückt wird, indem das aufblasbare Element nach Einbringen in das hohlprofilierte Bauteilelement (16) aus faserverstärktem Kunststoff aufgeblasen wird.

19. Verfahren nach Anspruch 18, **dadurch gekennzeichnet, dass** das hohlprofilierte Bauteilelement (16) vor dem teilweisen Hineinschieben von dessen Ende (20) in den hohlprofilierten Abschnitt (14) des formstabilen Bauteilelementes (12) radial verformt wird, derart, dass der Außenumfang (26) des hohlprofilierten Bauteilelementes (16) kleiner als der Innenumfang (24), insbesondere an dem Innenumfang (24) angeordnete, sich radial nach innen erstreckende Erhebungen (32, 32'), des formstabilen Bauteilelementes (12) im Bereich von dessen hohlförmigen Abschnitt (14) ist.

20. Verfahren nach Anspruch 18 oder 19, **dadurch gekennzeichnet, dass** das hohlprofilierte Bauteilelement (16) mit seinem Außenumfang (26) formschlüssig an den Innenumfang (24) und an dem Innenumfang (24) angeordnete, sich radial nach innen erstreckende Erhebungen (32, 32') und/oder sich radial nach außen erstreckende Vertiefungen (38, 38'), Ausnehmungen oder Durchbrüche des formstabilen Bauteilelementes (12, 12', 12", 12"', 12"") im Bereich von dessen hohlförmigen Abschnitt (14) (an-)gedrückt wird, wobei der Innenumfang (24) des hohlprofilierten Abschnittes (14) des formstabilen Bauteilelementes (12) und der Außenumfang (26) des hohlprofilierten Bauteilelementes (16) miteinander übereinstimmen oder zumindest im Wesentlichen übereinstimmen.

21. Verfahren nach einem der Ansprüche 18 bis 20, **dadurch gekennzeichnet, dass** das hohlprofilierte Bauteilelement (16) von dem aufblasbaren Element bis zu dessen vollständigen Aushärten mit Druck beaufschlagt wird.

22. Verfahren nach einem der Ansprüche 18 bis 20, **dadurch gekennzeichnet, dass** das hohlprofilierte Bauteilelement (16) von dem aufblasbaren Element mit einem Druck von etwa 2 bis etwa 10 bar, insbesondere von etwa 4 bis etwa 8 bar, vorzugsweise von etwa 6 bar, beaufschlagt wird.

23. Verwendung eines Bauteiles nach einem der Ansprüche 1 bis 17 in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Personenbeförderungswagen, wie ein Bus oder Kleinbus, Lastkraftwagen oder Wohnmobil.

24. Verwendung eines Bauteiles nach einem der Ansprüche 1 bis 17 zur Aufnahme und/oder Übertragung von mechanischen Kräften und/oder Momenten und insbesondere als mechanische Zug- und Druckkräfte und/oder Torsionskräfte übertragenden Streben und/oder rohr- oder stabförmige Verbindungselemente und/oder Fachwerke oder Fachwerkstrukturen und/oder Antriebswellen, vorzugsweise mit wenigstens einem oder mehreren endseitig angeordneten Anschlusselementen (30), Gelenkaugen, Gelenkkopf oder dergleichen Krafteinleitungs- oder -übertragungselementen, in Fahrzeugen, ganz bevorzugt in Flugzeugen und Raumflugkörpern als Stütz- oder Stabilisierungsstreben zur strukturellen Verstärkung einer Rumpfstruktur und in Landfahrzeugen als Stütz- oder Stabilisierungsstreben zur strukturellen Verstärkung einer Karosseriestruktur.

## Claims

1. Component for absorbing and/or transmitting mechanical forces and/or moments, comprising at least one dimensionally stable component element (12, 12', 12", 12"', 12"") having at least one hollow-profiled section (14), and at least one hollow-profiled component element (16) consisting of fibre-reinforced plastic, being partially received by the hollow-profiled section (14) of the dimensionally stable component element (12, 12', 12'', 12''', 12""), **characterized in that** the at least one hollow-profiled component element (16) consisting of fibre-reinforced plastic is arranged in the hollow-profiled section (14) of the dimensionally stable component element (12, 12', 12'', 12"', 12'"') by means of raised portions (32, 32') which extend radially inwards and/or depressions (38, 38') which extend radially outwards, recesses or holes in the hollow-profiled section (14) of the dimensionally stable component element for absorbing and/or transmitting mechanical tensile, compressive and torsional forces and/or the moments by pressing the hollow-profiled component element (16) with its outer circumference (26) in a form-fitting manner onto/against the inner circumference (24) and onto/against the raised portions (32, 32') and/or depressions (38, 38'), recesses or holes of the dimensionally stable component element (12), which are arranged along the inner circumference (24) in the area of the hollow-profiled section (14) and extend radially inwards or outwards, respectively, wherein the inner circumference (24) of the hollow-profiled section (14) of the dimensionally stable component element (12, 12', 12", 12''', 12"") and the outer circumference (26) of the hollow-profiled component element (16) consisting of fibre-reinforced plastic correspond to each other or at least substantially correspond to each other.

2. Component according to claim 1, **characterized in that** the raised portions (32, 32') which extend radially inwards and/or the depressions (38, 38') which extend radially outwards, recesses or holes are arranged across the inner circumference (24) of the hollow-profiled section (14) of the dimensionally stable component element (12, 12', 12", 12"', 12"") at an equal distance to each other.

3. Component according to claim 1 or 2, **characterized in that** the raised portions (32, 32') which extend radially inwards and/or the depressions (38, 38') which extend radially outwards, recesses or holes are designed in an oblong, elongated, bead-like, finger-shaped, meandering, wedge-shaped, angled, circular, ellipsoid, elliptic, oval, triangular, quadrangular, square or rectangular, multangular, trapezoid, parallelogram-shaped or polygonal shape and/or as a combination of the above.

4. Component according to one of the claims 1 to 3, **characterized in that** the raised portions (32, 32') which extend radially inwards and/or the depressions (38, 38') which extend radially outwards, recesses or holes are arranged axially or at an angle (± α) to the longitudinal axis (22) of the dimensionally stable component element (12, 12', 12", 12"', 12"") and of the hollow-profiled component element (16).

5. Component according to one of the claims 1 to 4, **characterized in that** the raised portions (32, 32') which extend radially inwards and/or the depressions (38, 38') which extend radially outwards, recesses or holes are arranged in an offset position to each other across the inner circumference (24) of the hollow-profiled section (14) of the dimensionally stable component element (12, 12', 12'', 12"', 12'"') axially to the longitudinal axis (22) of the dimensionally stable component element (12, 12', 12", 12"', 12"") and of the hollow-profiled component element (16).

6. Component according to one of the claims 1 to 5, **characterized in that** the raised portions (32, 32') which extend radially inwards and/or the depressions (38, 38') which extend radially outwards, recesses or holes are designed with continous transitions to/into/in the adjacent or neighbouring area(s).

7. Component according to one of the claims 1 to 6, **characterized in that** the inner circumference (24) of the hollow-profiled section (14) of the dimensionally stable component element (12) and the outer circumference (26) of the hollow-profiled component element (16) when producing a development view of each cross-section through the hollow-profiled section (14) of the dimensionally stable component element (12, 12', 12'', 12"', 12"") and the hollow-profiled component element (16) perpendicular to their longitudinal axis (22) have the same or substantially same length (34, 36).

8. Component according to one of the claims 1 to 7, **characterized in that** the dimensionally stable component element (12, 12', 12'', 12''', 12"") at least partly, in particular in an area of its hollow-profiled section (14), and the hollow-profiled component element (16) have an outer circumference (26) with the same shape and dimension.

9. Component according to one of the claims 1 to 8, **characterized in that** the dimensionally stable component element (12, 12', 12'', 12"', 12"") and/or the hollow-profiled component element (16) is/are designed in a lightweight and/or corrosion-resistant way.

10. Component according to one of the claims 1 to 9, **characterized in that** the dimensionally stable component element (12, 12', 12", 12"', 12"") is made of metal, in particular of steel, stainless steel, aluminum, titanium, an alloy of the above, and/or made of plastic, in particular of polyimide (PI), polyoximethylene (POM) or polytetrafluorethylene (PTFE), with or without aluminum oxide, aluminum nitride, aramid, basalt, boron nitride, glass, graphite, carbon, nylon, polyethylene, polyester, silicon carbide, silicon nitride and/or ceramic fibre reinforcement, and/or a combination of the above.

11. Component according to one of the claims 1 to 10, **characterized in that** the dimensionally stable component element (12, 12', 12'', 12''', 12"") can be produced by milling, turning, grinding or similar surface treatment, casting or fine casting, drawing or deep drawing and/or, in particular subsequent, welding and/or a combination of the above.

12. Component according to one of the claims 1 to 11, **characterized in that** the dimensionally stable component element (12, 12', 12'', 12"', 12"") is designed as a connecting or linking element (30), fitting, flange, insert coupling to join at least one hollow-profiled component element (16) consisting of fibre-reinforced plastic, node element (40, 40') for a framework or framework structure or similar connector body, in particular with an articulated joint lug, articulated joint head or similar force induction or transmission element.

13. Component according to one of the claims 1 to 12, **characterized in that** the hollow-profiled component element (16) consisting of fibre-reinforced plastic is formed of aluminum oxide, aluminum nitride, aramid, basalt, boron nitride, glass, graphite, carbon, nylon, polyethylene, polyester, silicon carbide, silicon nitride and/or ceramic fibres and/or a combination of the above and/or formed of fibre composite material.

14. Component according to one of the claims 1 to 13, **characterized in that** the hollow-profiled component element (16) consisting of fibre-reinforced plastic can be produced using a prepreg method, wet impregnation method or resin transfer moulding (RTM) method and/or a combination of the above or similar method for producing fibre composite bodies.

15. Component according to one of the claims 1 to 14, **characterized in that** the hollow-profiled component element (16) consisting of fibre-reinforced plastic is designed in its cross-section with a circular, ellipsoid, elliptic, oval, triangular, quadrangular, square or rectangular, multangular, trapezoid, parallelogram-shaped or polygonal shape and/or as one combination of the above.

16. Component according to one of the claims 1 to 15, **characterized in that** the dimensionally stable component element (12, 12', 12'', 12''', 12"") and/or the hollow-profiled component element (16) consisting of fibre-reinforced plastic is/are formed, in particular completely or partly, in an oblong, elongated, curved, meandering, wave-shaped, snake-shaped, angled, (semi) circular, (semi) ellipsoid, convoluted, bent shape and/or as a combination of the above.

17. Component according to one of the claims 1 to 15, **characterized in that** the dimensionally stable component element (12, 12', 12'', 12''', 12"") and/or the hollow-profiled component element (16) consisting of fibre-reinforced plastic is/are arranged, in particular completely or partly, in at least one spatial plane.

18. Method for producing a component for the absorption and/or transmission of mechanical forces and/or moments comprising at least one dimensionally stable component element (12, 12', 12", 12"', 12"") with a hollow-profiled section (14) and at least one hollow-profiled component element (16) consisting of fibre-reinforced plastic according to one of the preceding claims, wherein the at least one hollow-profiled component element (16) consisting of fibre-reinforced plastic is inserted with one end (20) partly into the hollow-profiled section (14) of the dimensionally stable component element (12, 12', 12", 12"', 12"") and received by the hollow-profiled section (14) of the dimensionally stable component element (12), and subsequently is pressed with its outer circumference (26) in a form-fitting manner onto/against the inner circumference (24) of the dimensionally stable component element (12) in the area of its hollow-shaped section (14) by an inflatable element that is introduced into the hollow-profiled component element (16) consisting of fibre-reinforced plastic by inflating the inflatable element after its introduction into the hollow-profiled component element (16) consisting of fibre-reinforced plastic.

19. Method according to claim 18, **characterized in that** the hollow-profiled component element (16), before its end (20) is being partly inserted into the hollow-profiled section (14) of the dimensionally stable component element (12), is radially deformed in such a way that the outer circumference (26) of the hollow-profiled component element (16) is smaller than the inner circumference (24), in particular at raised portions (32, 32') being arranged along the inner circumference (24) and extending radially inwards, of the dimensionally stable component element (12) in the area of its hollow-shaped section (14).

20. Method according to claim 18 or 19, **characterized in that** the hollow-profiled component element (16) is pressed with its outer circumference (26) in a form-fitting manner onto/against the inner circumference (24) and raised portions (32, 32') being arranged along the inner circumference (24) and extending radially inwards and/or depressions (38, 38') being arranged along the inner circumference (24) and extending radially outwards, recesses or holes of the dimensionally stable component element (12, 12', 12'', 12"', 12"") in the area of its hollow-shaped section (14), wherein the inner circumference (24) of the hollow-profiled section (14) of the dimensionally stable component element (12) and the outer circumference (26) of the hollow-profiled component element (16) correspond to each other or at least substantially correspond to each other.

21. Method according to one of the claims 18 to 20, **characterized in that** the hollow-profiled component element (16) is pressurized by the inflatable element until it has fully cured.

22. Method according to one of the claims 18 to 20, **characterized in that** the hollow-profiled component element (16) is pressurized by the inflatable element with a pressure of approximately 2 to approximately 10 bar, in particular of approximately 4 to approximately 8 bar, preferably of approximately 6 bar.

23. Use of a component according to one of the claims 1 to 17 in vehicles, in particular in aircraft or aerospace aircraft, preferably in aero planes and spacecraft, in particular in watercraft, preferably in a submarine or air cushion craft (hovercraft), or in particular in land vehicles, preferably in a motor car, people transport vehicle such as a bus or van, truck or camper van.

24. Use of a component according to one of the claims 1 to 17 for the absorption and/or transmission of mechanical forces and/or moments and in particular as struts and/or tube or rod-shaped connecting elements and/or frameworks or framework structures and/or drive shafts transmitting mechanical tensile and compressive forces and/or torsional forces, preferably with at least one or several connector elements (30), articulated joint lugs, articulated joint head or similar force flow or transmission elements, in vehicles, preferably in aircraft or spacecraft as support or stabilizing struts for the structural reinforcement of a fuselage structure, and in land vehicles as support or stabilizing struts for the structural reinforcement of a vehicle body structure.

## Revendications

1. Composant pour encaisser et/ou transmettre des forces mécaniques et/ou des couples, comprenant au moins un élément de composant à forme stable (12, 12', 12", 12"', 12"") avec au moins une portion à profil creux (14), et au moins un élément de composant à profil creux (16) en matière plastique renforcée par des fibres, qui est partiellement reçu par la portion à profil creux (14) de l'élément de composant à forme stable (12, 12', 12'', 12"', 12""), **caractérisé en ce que** ledit au moins un élément de composant à profil creux (16) en matière plastique renforcée par des fibres est agencé dans la portion à profil creux (14) de l'élément de composant à forme stable (12, 12', 12'', 12"', 12"") au moyen de bosses (32, 32') s'étendant radialement vers l'intérieur et/ou au moyen de renfoncements (38, 38') s'étendant radialement vers l'extérieur, d'évidements ou de traversées dans la portion à profil creux (14) de l'élément de composant à forme stable destiné à encaisser et/ou à transmettre des forces de traction, de compression et de torsion mécaniques et/ou des couples par appui sous pression de l'élément de composant à profil creux (16) avec sa périphérie extérieure (26) en coopération de formes contre la périphérie intérieure (24), et contre les bosses (32, 32') et/ou les renfoncements (38, 38'), les évidements ou les traversées de l'élément de composant à forme stable (12), qui sont agencé(e)s sur la périphérie intérieure (24) dans la région de la portion à profil creux (14) et s'étendent radialement vers l'intérieur ou vers l'extérieur, dans lequel la périphérie intérieure (24) de la portion à profil creux (14) de l'élément de composant à forme stable (12, 12', 12", 12"', 12"") et la périphérie extérieure (26) de l'élément de composant à profil creux (16) en matière plastique renforcée par des fibres coïncident l'une avec l'autre ou coïncident au moins sensiblement l'une avec l'autre.

2. Composant selon la revendication 1, **caractérisé en ce que** les bosses (32, 32') s'étendant radialement vers l'intérieur et/ou les renfoncements (38, 38') s'étendant radialement vers l'extérieur, les évidements ou les traversées sont agencé(e)s à distance régulière les un(e)s des autres sur la périphérie intérieure (24) de la portion à profil creux (14) de l'élément de composant à forme stable (12, 12', 12", 12"', 12"").

3. Composant selon la revendication 1 ou 2, **caractérisé en ce que** les bosses (32, 32') s'étendant radialement vers l'intérieur et/ou les renfoncements (38, 38') s'étendant radialement vers l'extérieur, les évidements ou les traversées, sont réalisé(e)s sous forme oblongue, allongée, à la manière de bourrelets, sous la forme de doigts, sous la forme de méandres, en forme de coin, en équerre, sous forme de cercle, d'ellipse, sous forme elliptique, ovale, triangulaire, quadrangulaire, carrée ou rectangulaire, polygonale, sous forme de trapèze, sous forme de parallélogramme ou sous forme de polygone et/ou par des combinaisons de ces formes.

4. Composant selon l'une des revendications 1 à 3, **caractérisé en ce que** les bosses (32, 32') s'étendant vers l'intérieur et/ou les renfoncements (38, 38') s'étendant radialement vers l'extérieur, les évidements ou les traversées sont agencé(e)s de manière axiale et/ou sous un angle (± α) par rapport à l'axe longitudinal (22) de l'élément de composant à forme stable (12, 12', 12'', 12''', 12"") et de l'élément de composant à profil creux (16).

5. Composant selon l'une des revendications 1 à 4, **caractérisé en ce que** les bosses (32, 32') s'étendant radialement vers l'intérieur et/ou les renfoncements (38, 38') s'étendant radialement vers l'extérieur, les évidements ou les traversées sont agencé(e)s sur la périphérie intérieure (24) de la portion à profil creux (14) de l'élément de composant à forme stable (12, 12', 12", 12"', 12"") en décalage les un(e)s par rapport aux autres axialement vis-à-vis de l'axe longitudinal (22) de l'élément de composants à forme stable (12, 12', 12", 12"', 12"") et de l'élément de composant à profil creux (16).

6. Composant selon l'une des revendications 1 à 5, **caractérisé en ce que** les bosses (32, 32') s'étendant radialement vers l'intérieur et/ou les renfoncements (38, 38') s'étendant radialement vers l'extérieur, les évidements ou les traversées sont réalisé(e)s avec des transitions continues vers la zone ou les zones adjacentes ou voisines.

7. Composant selon l'une des revendications 1 à 6, **caractérisé en ce que** la périphérie intérieure (24) de la portion à profil creux (14) de l'élément de composant à forme stable (12) et la périphérie extérieure (26) de l'élément de composant à profil creux (16) présentent, dans un développement de chaque section transversale à travers la portion à profil creux (14) de l'élément de composant à forme stable (12, 12', 12", 12"', 12"") et l'élément de composant à profil creux (16), la même longueur ou sensiblement la même longueur (34, 36) perpendiculairement à leur axe longitudinal (22).

8. Composant selon l'une des revendications 1 à 7, **caractérisé en ce que** l'élément de composant à forme stable (12, 12', 12", 12"', 12"") comporte, au moins partiellement, et en particulier dans une zone de sa portion à profil creux (14), et l'élément de composant à profil creux (16) comporte une périphérie extérieure (26) de même forme et de même dimension.

9. Composant selon l'une des revendications 1 à 8, **caractérisé en ce que** l'élément de composant à forme stable (12, 12', 12", 12"', 12"") et/ou l'élément de composant à profil creux (16) est/sont réalisés avec une structure légère et/ou de manière à résister à la corrosion.

10. Composant selon l'une des revendications 1 à 9, **caractérisé en ce que** l'élément de composant à forme stable (12, 12', 12", 12"', 12"") est réalisé en métal, en particulier en acier, acier inoxydable, aluminium, titane, un alliage de ceux-ci, et/ou en matière plastique, en particulier en polyimide (PI), polyoxyméthylène (POM) ou en polytétrafluoro-éthylène (PTFE), sans ou avec renforcement avec des fibres d'oxyde d'aluminium, de nitrure d'aluminium, aramide, de basalte, de nitrure de bore, de verre, de graphite, de carbone, de nylon, de polyéthylène, de polyester, de carbure de silicium, de nitrure de silicium et/ou de céramique, et/ou une combinaison de celles-ci.

11. Composant selon l'une des revendications 1 à 10, **caractérisé en ce que** l'élément de composant à forme stable (12, 12', 12'', 12"', 12"") est fabriqué par fraisage, tournage, meulage ou traitement de surface analogue, par fonderie ou par fonderie fine, par étirage ou emboutissage et/ou soudage, en particulier final, et/ou par une combinaison de ces procédés.

12. Composant selon l'une des revendications 1 à 11, **caractérisé en ce que** l'élément de composant à forme stable (12, 12', 12", 12"', 12"") est réalisé sous forme d'élément de connexion ou de liaison (30), de raccord, de bride, d'accouplement à enfichage, pour la liaison d'au moins un élément de composant à profil creux (16) en matière plastique renforcée par des fibres, d'élément central (40, 40') pour un treillis ou une structure en treillis, ou de corps de liaison similaire, en particulier avec un oeillet d'articulation, une tête d'articulation, ou un élément similaire d'application ou de transmission de force.

13. Composant selon l'une des revendications 1 à 12, **caractérisé en ce que** l'élément de composant à profil creux (16) réalisé en matière plastique renforcée par des fibres est renforcé par des fibres d'oxyde d'aluminium, de nitrure d'aluminium, aramide, de basalte, de nitrure de bore, de verre, de graphite, de carbone, de nylon, de polyéthylène, de polyester, de carbure de silicium, de nitrure de silicium et/ou de céramique et/ou une combinaison de ceux-ci, et/ou est formé avec un matériau composite à base de fibres.

14. Composant selon l'une des revendications 1 à 13, **caractérisé en ce que** l'élément de composant à profil creux (16) en matière plastique renforcé par des fibres est susceptible d'être fabriqué par une procédure avec pré-imprégnation, une procédure d'imprégnation par voie humide, ou une procédure de moulage avec transfert de résine (RTM), et/ou une combinaison de ces procédures ou de procédures analogues pour la fabrication de corps composites à base de fibres.

15. Composant selon l'une des revendications 1 à 14, **caractérisé en ce que** l'élément de composant à profil creux (16) en matière plastique renforcée par des fibres est réalisé avec une section transversale ronde, en forme d'ellipse, elliptique, ovale, triangulaire, quadrangulaire, carrée ou rectangulaire, polygonale, en forme de trapèze, en forme de parallélogramme ou sous forme de polygone et/ou comme une combinaison de celles-ci.

16. Composant selon l'une des revendications 1 à 15, **caractérisé en ce que** l'élément de composant à forme stable (12, 12', 12", 12"', 12"") et/ou l'élément de composant à profil creux (16) en matière plastique renforcée par des fibres, est/sont formés, en particulier entièrement ou partiellement, sous forme oblongue, étirée en longueur, incurvée, en forme de méandres, en forme de vagues, en forme de serpentin, en équerre, en forme de (demi)-cercle, en forme de (demi)-ellipse, cintrée, courbée et/ou une combinaison de ces formes.

17. Composant selon l'une des revendications 1 à 15, **caractérisé en ce que** l'élément de composant à forme stable (12, 12', 12", 12"', 12"") et/ou l'élément de composant à profil creux (16) en matière plastique renforcée par des fibres est/sont agencés, en particulier entièrement ou partiellement, dans au moins un plan dans l'espace.

18. Procédé pour la fabrication d'un composant destiné à encaisser et/ou à transmettre des forces mécaniques et/ou des couples, comprenant au moins un élément de composant à forme stable (12, 12', 12'', 12"', 12"") avec une portion à profil creux (14), et au moins un élément de composant (16) à profil creux en matière plastique renforcée par des fibres, selon l'une des revendications précédentes, dans lequel ledit au moins un élément de composant à profil creux (16) en matière plastique renforcée par des fibres est enfilé avec une extrémité (20) partiellement dans la portion à profil creux (14) de l'élément de composant à forme stable (12, 12', 12'', 12"', 12"") et est reçu par la portion à profil creux (14) de l'élément de composant à forme stable (12) et est ensuite appliqué par pressage, au moyen d'un élément gonflable introduit dans l'élément de composant à profil creux (16) en matière plastique renforcée par des fibres, avec sa périphérie extérieure (26) en coopération de formes contre la périphérie intérieure (24) de l'élément de composant à profil creux (16) dans la région de sa portion à profil creux (14), en gonflant l'élément gonflable après son introduction dans l'élément de composant à profil creux (16) en matière plastique renforcée par des fibres.

19. Procédé selon la revendication 18, **caractérisé en ce que** l'élément de composant à profil creux (16) est déformé radialement lors de l'introduction partielle de son extrémité (20) dans la portion à forme creuse (14) de l'élément de composant à forme stable (12), de telle façon que la périphérie extérieure (26) de l'élément de composant à profil creux (16) est plus petite que la périphérie intérieure (24), en particulier que des bosses (32, 32') agencées au niveau de la périphérie intérieure (24) et s'étendant radialement vers l'intérieur, de l'élément de composant à forme stable (12) dans la région de sa portion à forme creuse (14).

20. Procédé selon la revendication 18 ou 19, **caractérisé en ce que** l'élément de composant à profil creux (16) est appliqué par pressage avec sa périphérie extérieure (26) en coopération de formes contre la périphérie intérieure (24) et contre des bosses (32, 32') agencées à la périphérie intérieure (24) et s'étendant radialement vers l'intérieur et/ou contre les renfoncements (38, 38') s'étendant radialement vers l'extérieur, des évidements ou des traversées de l'élément de composant à forme stable (12, 12', 12", 12"', 12"") dans la région de sa portion à forme creuse (14), dans lequel la périphérie intérieure (24) de la portion à profil creux (14) de l'élément de composant à forme stable (12) et la périphérie extérieure (26) de l'élément de composant à profil creux (16) coïncident l'une avec l'autre ou coïncident au moins sensiblement l'une avec l'autre.

21. Procédé selon l'une des revendications 18 à 20, **caractérisé en ce que** l'élément de composant à profil creux (16) est sollicité en pression par l'élément gonflable jusqu'à son durcissement complet.

22. Procédé selon l'une des revendications 18 à 20, **caractérisé en ce que** l'élément de composant à profil creux (16) est sollicité par l'élément gonflable avec une pression d'environ 2 à environ 10 bars, en particulier d'environ 4 à environ 8 bars, de préférence d'environ 6 bars.

23. Utilisation d'un composant selon l'une des revendications 1 à 17 dans des véhicules, en particulier des avions ou des engins volants de l'aéronautique et de l'aérospatiale, de préférence dans des avions ou des aéronefs, en particulier dans des véhicules marins, de préférence dans un sous-marin ou un véhicule sur coussin d'air (Hovercraft), ou en particulier dans des véhicules terrestres, de préférence dans une voiture automobile, un véhicule de transport de personnes, comme un autobus ou un minibus, dans des camions ou dans des mobile-homes.

24. Utilisation d'un composant selon l'une des revendications 1 à 17 pour encaisser et/ou transmettre des forces mécaniques et/ou des couples, et en particulier à titre d'entretoises qui transmettent des forces de traction et de compression mécaniques et/ou des forces de torsion, et/ou d'éléments de liaison en forme de tubes ou en forme de barreaux, et/ou des treillis ou des structures en treillis et/ou des arbres d'entraînement, de préférence avec au moins un élément de raccordement ou plusieurs éléments de raccordement (30) agencés du côté de l'extrémité, des oeillets d'articulation, des têtes d'articulation ou éléments similaires d'application ou de transmission de force, dans des véhicules, et de façon préférée dans des avions et des aéronefs, à titre d'entretoise de soutien ou de stabilisation pour le renforcement structurel d'une structure de carlingue, et dans des véhicules terrestres à titre d'entretoise de soutien ou de stabilisation pour le renforcement structurel d'une structure de carrosserie.
